# EUROPÄISCHE PATENTSCHRIFT

(11) **EP 0 723 990 B1**
(45) Veröffentlichungstag und Bekanntmachung des Hinweises auf die Patenterteilung: **23.02.2005**
(21) Anmeldenummer: 96810031.3
(22) Anmeldetag: 15.01.1996
(51) Int. Cl.: C08K 5/34

(54) **Synergistisches Stabilisatorgemisch**
Synergistic stabilizing mixture
Mélange synergique de stabilisateurs

(30) Priorität: 23.01.1995 EP 95810042
(43) Veröffentlichungstag der Anmeldung: 31.07.1996
(73) Patentinhaber: Ciba Specialty Chemicals Holding Inc., 4057 Basel (CH)
(72) Erfinder: Gugumus, François, Dr., CH-4123 Allschwil (CH)

(56) Entgegenhaltungen:
- EP-A- 0 252 877

## Beschreibung

Die vorliegende Erfindung betrifft ein Stabilisatorsystem enthaltend zwei spezifische hochmolekulare Polyalkylpiperidinderivate, die Verwendung dieses Stabilisatorsystems zum Stabilisieren von organischem Material sowie das mit dem erwähnten Stabilisatorsystem gegen thermischen, oxidativen oder lichtinduzierten Abbau geschützte organische Material.

In US-A-4 692 486, US-A-4 863 981, US-A-4 957 953, WO-A-92/12 201, EP-A-449 685, EP-A-632 092, GB-A-2 267 499 und in der Research Disclosure 34549 (Januar 1993) werden Stabilisatorgemische beschrieben, welche zwei Polyalkylpiperidinderivate enthalten.

Ein Gegenstand der vorliegenden Erfindung ist ein Stabilisatorgemisch enthaltend eine Komponente a) und eine Komponente b), c), d) oder e), wobei
die Komponente a) mindestens eine Verbindung der Formel I ist, 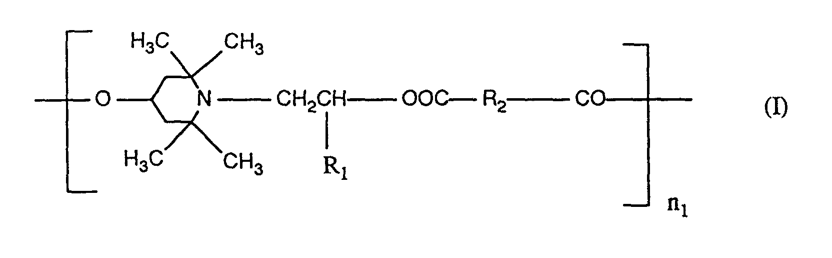 worin
R₁ Wasserstoff oder Methyl bedeutet,
R₂ eine direkte Bindung oder C₁-C₁₀-Alkylen ist und
n₁ eine Zahl von 2 bis 50 darstellt;
die Komponente b) mindestens eine Verbindung der Formeln IIa und IIb ist, 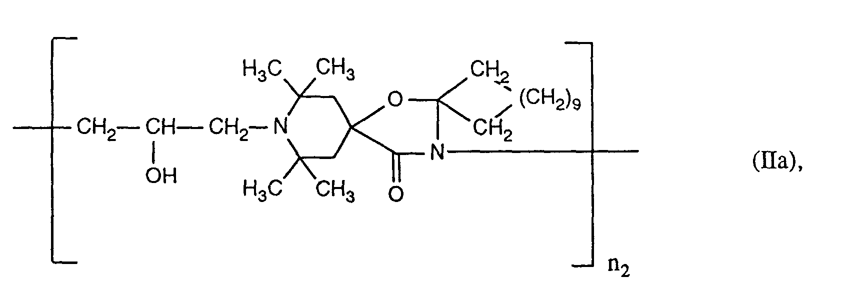 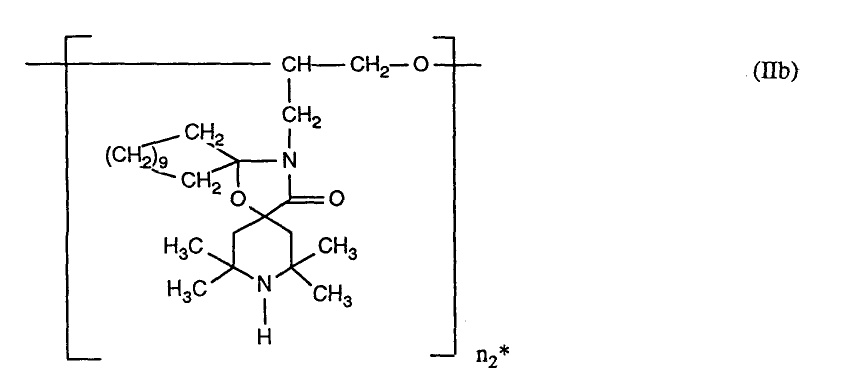 worin n₂ und n₂* eine Zahl von 2 bis 50 sind;
die Komponente c) mindestens eine Verbindung der Formel III ist, 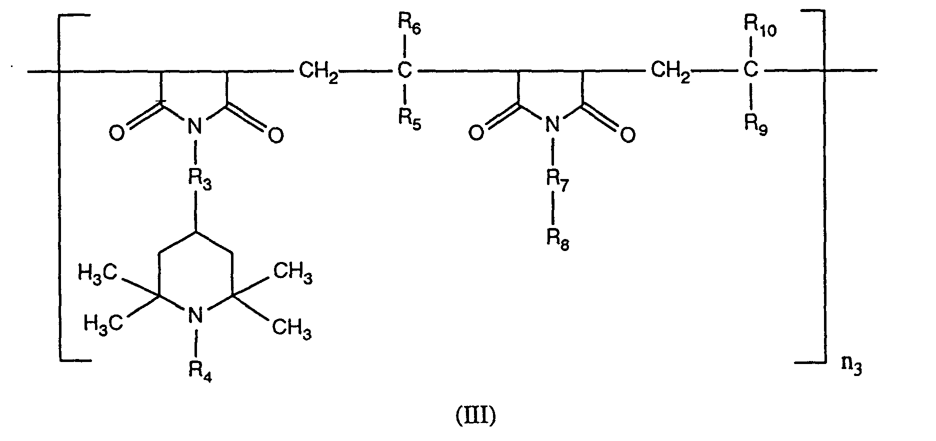 worin R₃ und R₇ unabhängig voneinander eine direkte Bindung oder eine Gruppe -N(X₁)-CO-X₂-CO-N(X₃)- bedeuten, X₁ und X₃ unabhängig voneinander Wasserstoff, C₁-C₈-Alkyl, C₅-C₁₂-Cycloalkyl, Phenyl, C₇-C₉-Phenylalkyl oder eine Gruppe der Formel IV 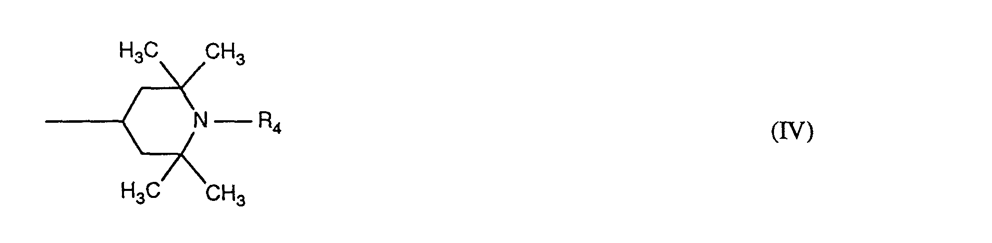 sind, X₂ eine direkte Bindung oder C₁-C₄-Alkylen darstellt,
R₄ Wasserstoff, C₁-C₈-Alkyl, O⁻, -CH₂CN, C₃-C₆-Alkenyl, C₇-C₉-Phenylalkyl, am Phenylrest durch C₁-C₄-Alkyl substituiertes C₇-C₉-Phenylalkyl oder C₁-C₈-Acyl ist,
R₅, R₆, R₉ und R₁₀ unabhängig voneinander Wasserstoff, C₁-C₃₀-Alkyl,
C₅-C₁₂-Cycloalkyl oder Phenyl bedeuten,
R₈ Wasserstoff, C₁-C₃₀-Alkyl, C₅-C₁₂-Cycloalkyl, C₇-C₉-Phenylalkyl, Phenyl oder eine Gruppe der Formel IV darstellt und
n₃ eine Zahl von 1 bis 50 ist;
die Komponente d) mindestens eine Verbindung der Formel V ist, 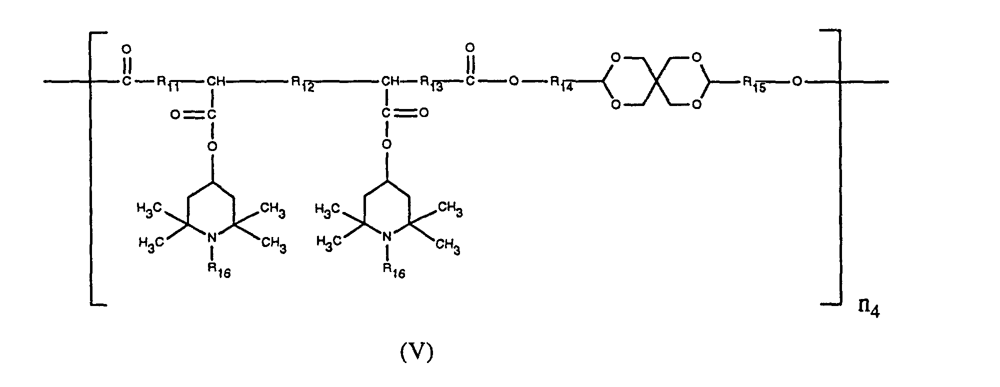 worin R₁₁, R₁₂, R₁₃, R₁₄ und R₁₅ unabhängig voneinander eine direkte Bindung oder C₁-C₁₀-Alkylene sind, R₁₆ eine der für R₄ angegebenen Bedeutungen besitzt und n₄ eine Zahl von 1 bis 50 darstellt; und
die Komponente e) ein Produkt erhältlich durch Umsetzung eines durch Reaktion eines Polyamins der Formel VIa mit Cyanursäurechlorid erhaltenen Produktes mit einer Verbindung der Formel VIb bedeutet, 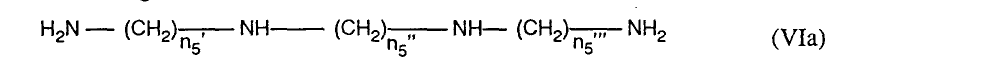 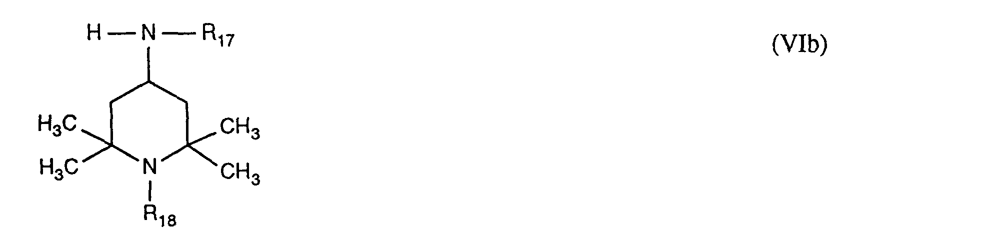 worin n₅', n₅'' und n₅''' unabhängig voneinander eine Zahl von 2 bis 12 sind, R₁₇ Wasserstoff, C₁-C₁₂-Alkyl, C₅-C₁₂-Cycloalkyl, Phenyl oder C₇-C₉-Phenylalkyl ist und R₁₈ eine der für R₄ angegebenen Bedeutungen besitzt.

Bevorzugt sind n₅', n₅'' und n₅''' 2 bis 4, R₁₇ C₁-C₄-Alkyl und R₁₈ Wasserstoff.

Beispiele für C₁-C₁₀-Alkylen sind Methylen, Ethylen, Propylen, Trimethylen, Tetramethylen, Pentamethylen, 2,2-Dimethyltrimethylen, Hexamethylen, Trimethylhexamethylen, Octamethylen und Decamethylen. R₂ bedeutet bevorzugt Ethylen, R₁₁ und R₁₃ bedeuten bevorzugt Methylen, R₁₄ bedeutet bevorzugt 2,2-Dimethylethylen und R₁₅ 1,1-Dimethylethylen.

Beispiele für Alkyl mit bis zu 30 Kohlenstoffatomen sind Methyl, Ethyl, Propyl, Isopropyl, n-Butyl, sec-Butyl, Isobutyl, tert-Butyl, 2-Ethylbutyl, n-Pentyl, Isopentyl, 1-Methylpentyl, 1,3-Dimethylbutyl, n-Hexyl, 1-Methylhexyl, n-Heptyl, Isoheptyl, 1,1,3,3-Tetramethylbutyl, 1-Methylheptyl, 3-Methylheptyl, n-Octyl, 2-Ethylhexyl, 1,1,3-Trimethylhexyl, 1,1,3,3-Tetramethylpentyl, Nonyl, Decyl, Undecyl, 1-Methylundecyl, Dodecyl, 1,1,3,3,5,5-Hexamethylhexyl, Tridecyl, Tetradecyl, Pentadecyl, Hexadecyl, Heptadecyl, Octadecyl, Eicosyl, Docosyl und Triacontyl. Eine der bevorzugten Bedeutungen von R₄, R₆, R₁₀, R₁₆ und R₁₈ ist C₁-C₄-Alkyl, insbesondere Methyl. Eine der bevorzugten Bedeutungen von R₅ und R₉ ist C₁-C₂₅-Alkyl, insbesondere C₁₅-C₂₅-Alkyl, z.B. Hexadecyl und C₁₈-C₂₂-Alkyl. Eine der bevorzugten Bedeutungen von R₈ ist C₁-C₂₅-Alkyl, insbesondere Octadecyl.

Beispiele für C₅-C₁₂-Cycloalkyl sind Cyclopentyl, Cyclohexyl, Cycloheptyl, Cyclooctyl und Cyclododecyl. C₅-C₈-Cycloalkyl, insbesondere Cyclohexyl ist bevorzugt.

Beispiele für C₇-C₉-Phenylalkyl sind Benzyl und Phenylethyl.

Am Phenylrest durch C₁-C₄-Alkyl substituiertes C₇-C₉-Phenylalkyl ist zum Beispiel Methylbenzyl, Dimethylbenzyl, Trimethylbenzyl oder tert-Butylbenzyl.

Beispiele für C₃-C₆-Alkenyl sind Allyl, 2-Methallyl, Butenyl, Pentenyl und Hexenyl. Allyl ist bevorzugt.

C₁-C₈-Acyl bedeutet bevorzugt C₁-C₈-Alkanoyl, C₃-C₈-Alkenoyl oder Benzoyl. Beispiele sind Formyl, Acetyl, Propionyl, Butyryl, Pentanoyl, Hexanoyl, Octanoyl, Benzoyl, Acryloyl und Crotonoyl.

Eine der bevorzugten Bedeutungen von R₅ und R₉ ist Phenyl.

X₂ und R₁₂ sind bevorzugt eine direkte Bindung.

X₁, X₃, R₄, R₁₆ und R₁₈ bedeuten bevorzugt Wasserstoff.

Die als Komponenten a) bis e) beschriebenen Verbindungen sind im wesentlichen bekannt (teilweise im Handel erhältlich) und können nach bekannten Verfahren, zum Beispiel wie in US-A-4 233 412, US-A-4 340 534, US-A-4 857 595, DD-A-262 439 (Derwent 89-122 983/17, Chemical Abstracts 111:58 964u), DE-A-4 239 437 (Derwent 94-177 274/22), US-A-4 529 760, US-A-4 477 615 und Chemical Abstracts - CAS No. 136 504-96-6 beschrieben, hergestellt werden.

Die Komponente e) kann in Analogie zu bekannten Verfahren zum Beispiel durch Umsetzung von einem Polyamin der Formel VIa mit Cyanursäurechlorid in einem molaren Verhältnis von 1:2 bis 1:4 in Gegenwart von wasserfreiem Lithium-, Natriumoder Kalium-carbonat in einem organischen Lösungsmittel wie 1,2-Dichlorethan, Toluol, Xylol, Benzol, Dioxan oder tert-Amylalkohol bei einer Temperatur von -20°C bis +10°C, bevorzugt -10°C bis +10°C, insbesondere 0°C bis +10°C, während 2 bis 8 Stunden und anschliessender Reaktion des erhaltenen Produktes mit einem 2,2,6,6-Tetramethyl-4-piperidylamin der Formel VIb hergestellt werden. Das molare Verhältnis von 2,2,6,6-Tetramethyl-4-piperidylamin zu eingesetztem Polyamin der Formel VIa beträgt beispielsweise 4:1 bis 8:1. Die Menge an 2,2,6,6-Tetramethyl-4-piperidylamin kann auf einmal oder in mehreren Portionen im Abstand von einigen Stunden zugegeben werden.

Bevorzugt beträgt das Verhältnis Polyamin der Formel VIa : Cyanursäurechlorid : 2,2,6,6-Tetramethyl-4-piperidylamin der Formel VIb 1:3:5 bis 1:3:6.

Folgendes Beispiel gibt eine Möglichkeit für die Herstellung der bevorzugten Komponente e) an.

Beispiel: 23, 6 g (0,128 Mol) Cyanursäurechlorid, 7,43 g (0,0426 Mol) N,N'-Bis[3-aminopropyl]ethylendiamine und 18 g (0,13 Mol) wasserfreies Kaliumcarbonat werden in 250 ml 1,2-Dichlorethan bei 5°C unter Rühren während 3 Stunden umgesetzt. Die Mischung wird weitere 4 Stunden auf Raumtemperatur erwärmt. 27,2 g (0,128 Mol) N-(2,2,6,6-tetramethyl-4-piperidyl)butylamin werden hinzugegeben und das erhaltene Gemisch 2 Stunden auf 60°C erwärmt. Es werden nochmals 18 g (0,13 Mol) wasserfreies Kaliumcarbonat hinzugegeben und das Gemisch weitere 6 Stunden bei 60°C erwärmt. Das Lösungsmittel wird unter leichtem Vakuum (200 mbar) abdestilliert und durch Xylen ersetzt. 18,2 g (0,085 Mol) N-(2,2,6,6-tetramethyl-4-piperidyl)butylamin und 5,2 g (0,13 Mol) Natriumhydroxid (ground sodium hydroxide) werden hinzugefügt und das Gemisch am Rückfluss 2 Stunden erhitzt und weitere 12 Stunden wird das bei der Reaktion entstehende Wasser durch azeotrope Destillation entfernt. Das Gemisch wird filtriert. Die Lösung wird mit Wasser gewaschen und über Na₂SO₄ getrocknet. Das Lösungsmittel wird verdunstet und der Rückstand bei 120-130°C im Vakuum (0,1 mbar) getrocknet. Die Komponente e) wird als farbloses Harz erhalten.

Allgemein kann die Komponente e) zum Beispiel durch eine Verbindung der Formel VI-1, VI-2 oder VI-3 wiedergegeben werden. Sie kann auch als Gemisch dieser drei Verbindungen vorliegen.

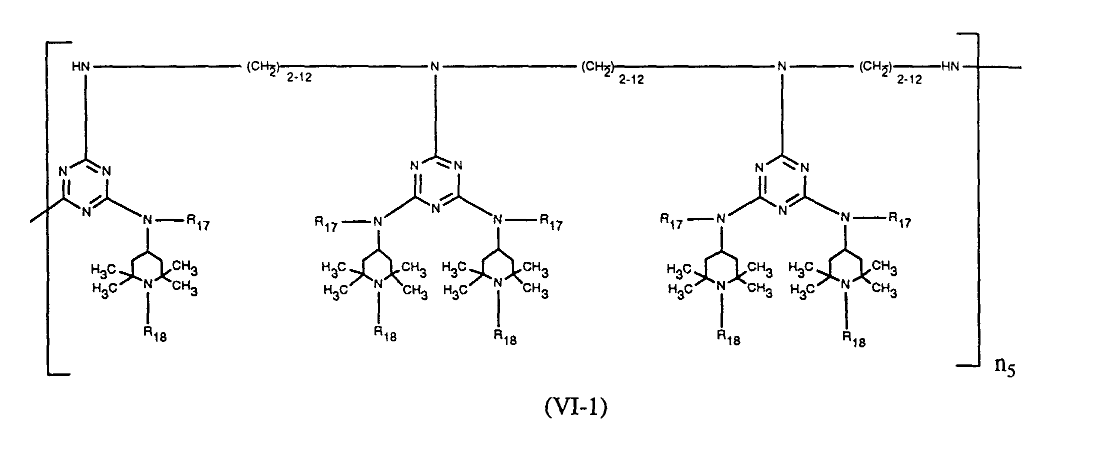

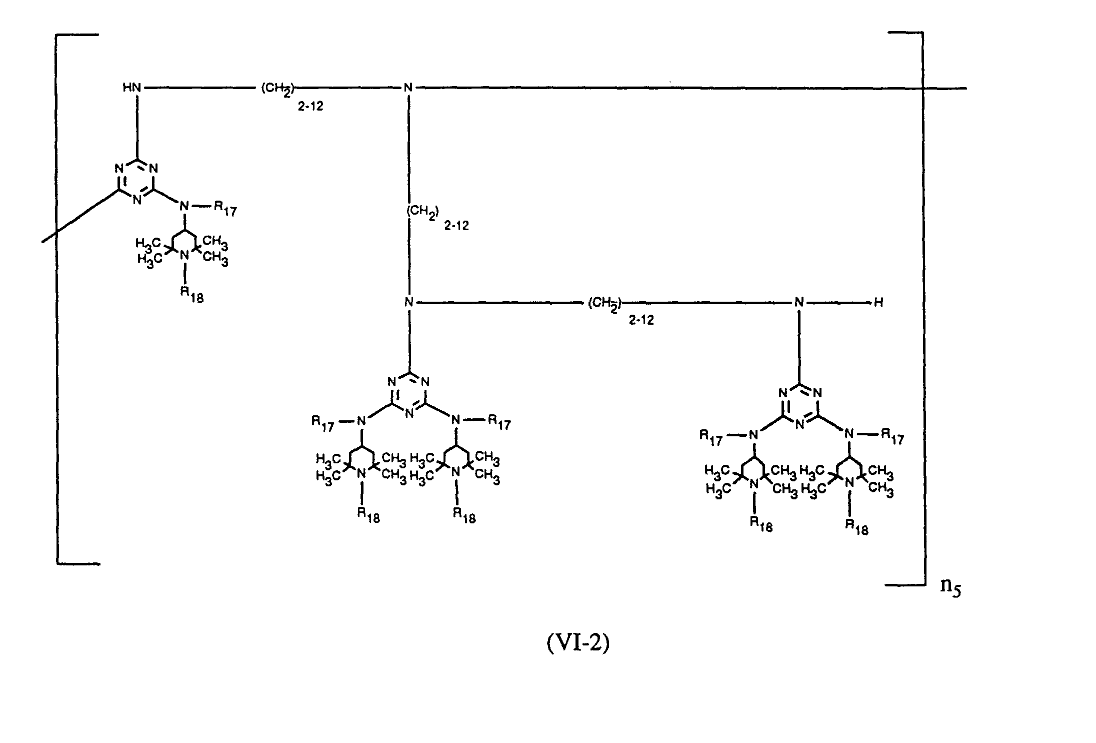

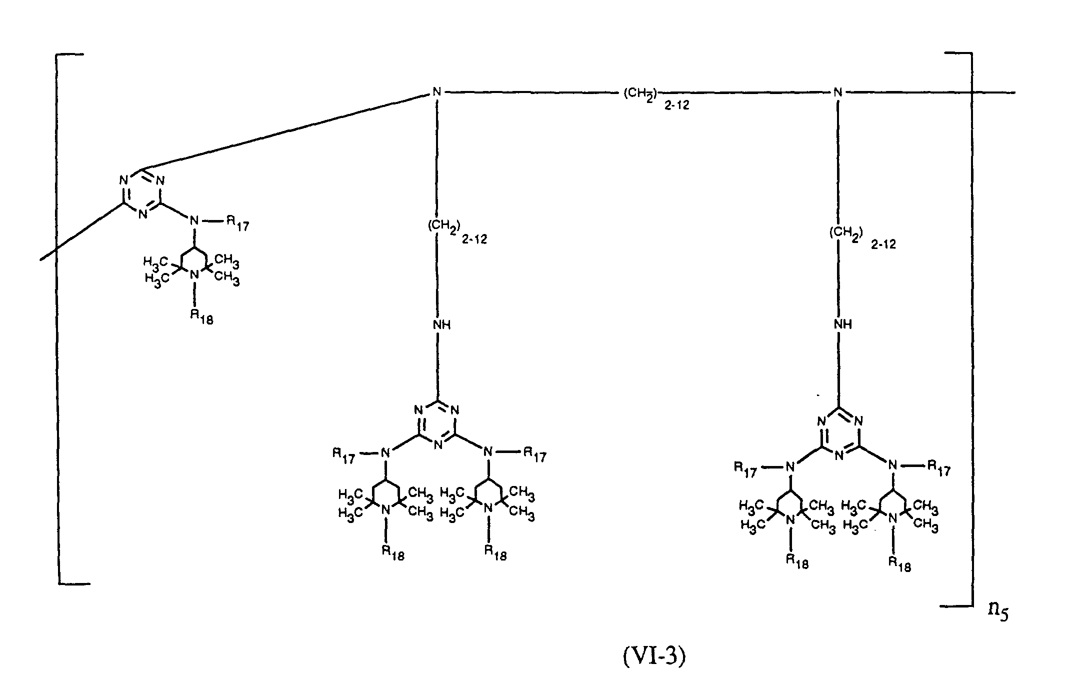

Eine bevorzugte Bedeutung der Formel VI-1 ist

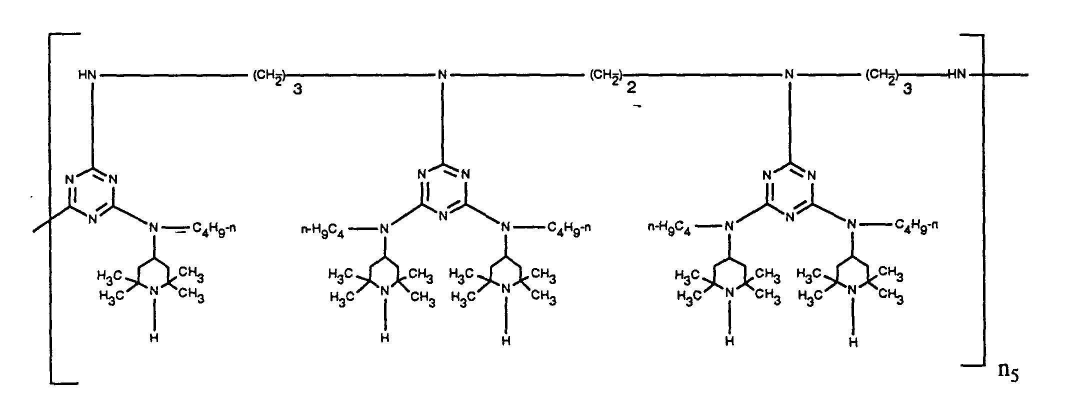

Eine bevorzugte Bedeutung der Formel VI-2 ist

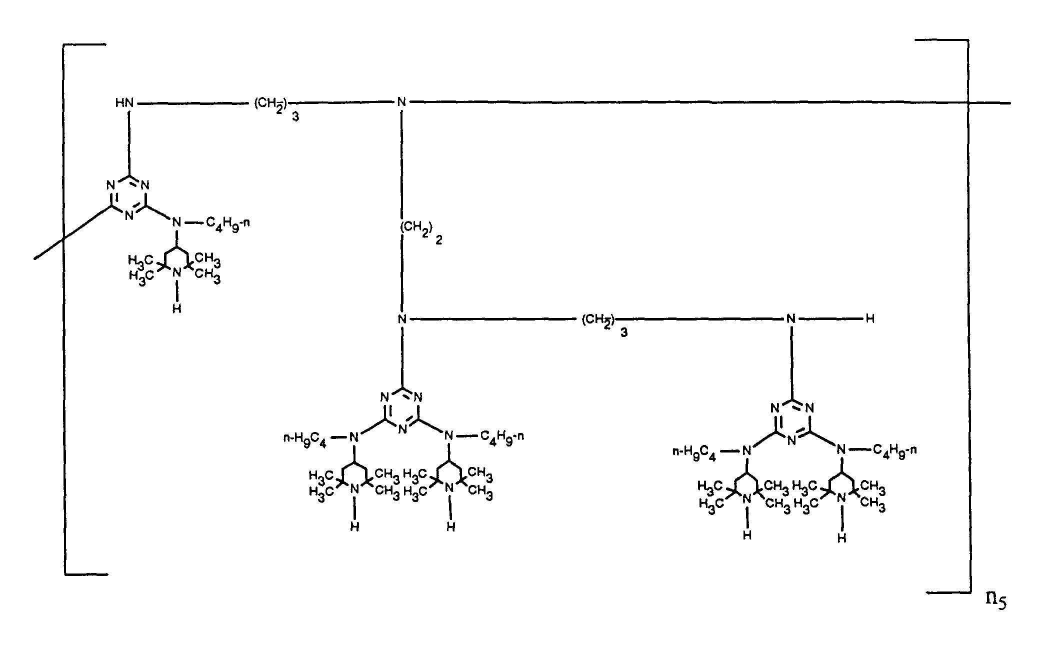

Eine bevorzugte Bedeutung der Formel VI-3 ist

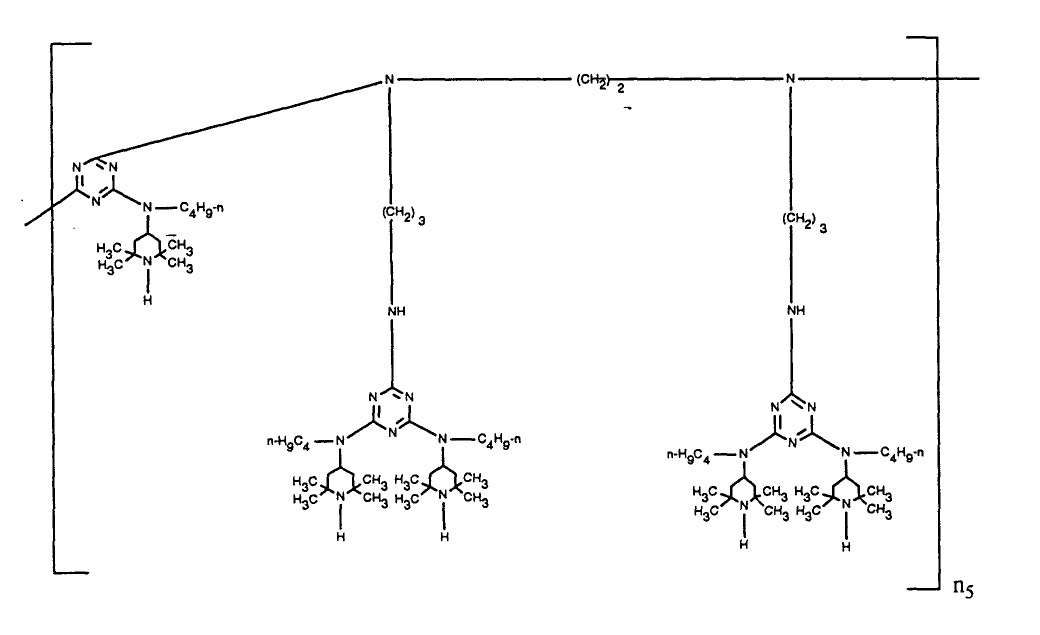

In den oben angegebenen Formeln VI-1 bis VI-3 bedeutet n₅ bevorzugt 1 bis 20.

Als Komponente a) wird bevorzugt ®TINUVIN 622, als Komponente b) ®HOSTAVIN N 30, als Komponente c) ®UVINUL 5050 H, ®LICHTSCHUTZSTOFF UV 31 oder ®LUCHEM B 18, als Komponente d) ®MARK LA 63 oder ®MARK LA 68 und als Komponente e) ®UVASORB HA 88 eingesetzt.

Die Verbindungen der Formeln IIa und IIb können zusammen als Gemisch anfallen und auch als solches als Komponente b) in dem erfindungsgemässen Stabilisatorsystem eingesetzt werden. Das Verhältnis von IIa:IIb beträgt z.B. 20:1 bis 1:20 oder 1:10 bis 10:1.

Die Bedeutungen der Endgruppen, die in den Verbindungen der Formeln I, IIa, IIb, III, IV, V, VI-1, VI-2 und VI-3 die freien Valenzen absättigen, sind abhängig von den zur Herstellung benutzten Verfahren. Die Endgruppen können auch nach der Herstellung der Verbindungen noch modifiziert werden.

Erfolgt die Herstellung der Verbindungen der Formel I z.B. durch Umsetzung einer Verbindung der Formel 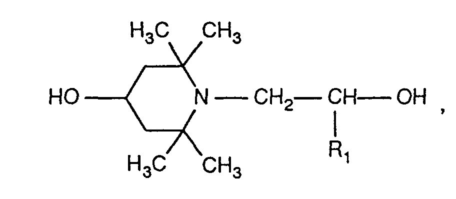 worin R1 Wasserstoff oder Methyl bedeutet, mit einem Dicarbonsäurediester der Formel Y-OOC-R₂-COO-Y, worin Y beispielsweise Methyl, Ethyl oder Propyl ist und R₂ die oben angegebene Bedeutung hat, so ist die Endgruppe, die an den 2,2,6,6-Tetramethyl-4-oxypiperidin-1-ylrest gebunden ist, Wasserstoff oder -CO-R₂-COO-Y und die Endgruppe, die an den Diacylrest gebunden ist, bedeutet -O-Y oder

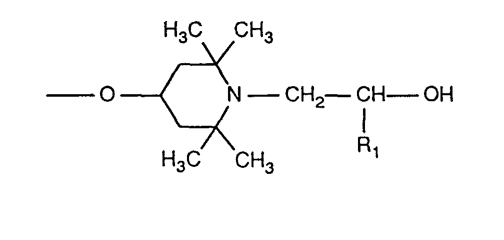

In den Verbindungen der Formel IIa kann die Endgruppe, die an den Stickstoff gebunden ist, z. B. Wasserstoff bedeuten und die Endgruppe, die an den 2-Hydroxypropylenrest gebunden ist, kann z. B. eine Gruppe 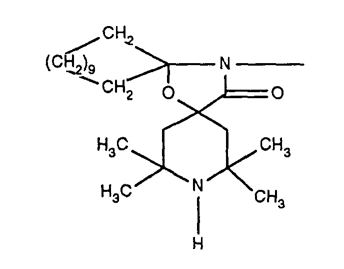 sein.

In den Verbindungen der Formel IIb kann die Endgruppe, die an den Dimethylenrest gebunden ist, z. B. -OH bedeuten und die Endgruppe, die an den Sauerstoff gebunden ist, kann z. B. Wasserstoff sein. Die Endgruppen können auch Polyetherreste darstellen.

In den Verbindungen der Formel III ist die Endgruppe, die an den 2,5-Dioxopyrrolidinring gebunden ist, z.B. Wasserstoff und die Endgruppe, die an den Rest -C(R₉)(R₁₀)- gebunden ist, z.B.

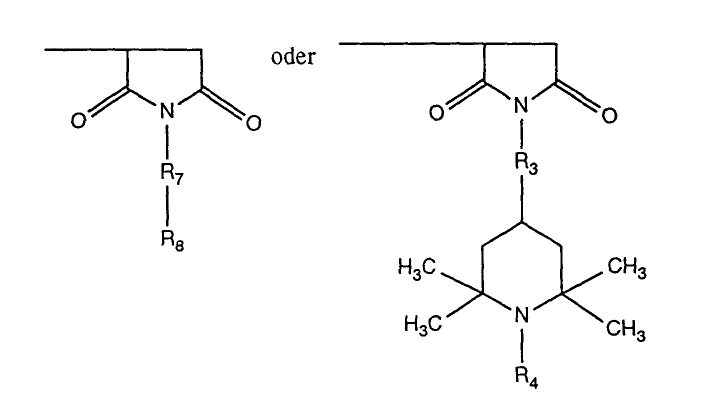

In den Verbindungen der Formel V ist die Endgruppe, die an den Carbonylrest gebunden ist, z.B. 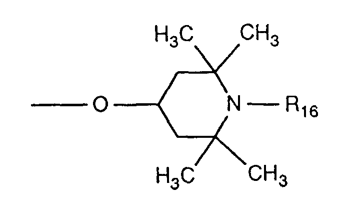 und die Endgruppe, die an den Sauerstoffrest gebunden ist, bedeutet z.B.

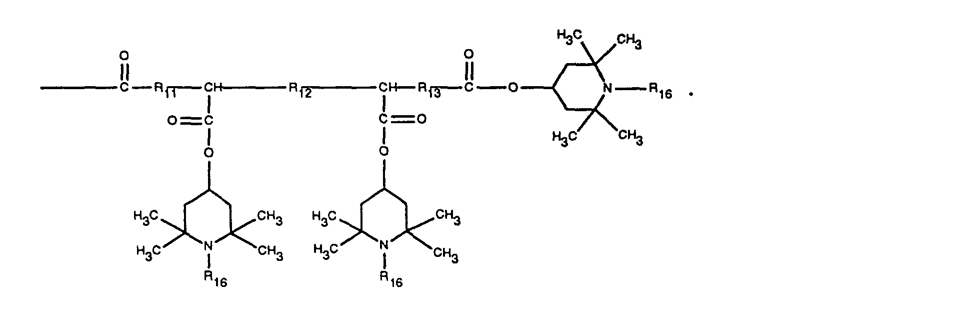

In den Verbindungen der Formeln VI-1, VI-2 und VI-3 ist die Endgruppe, die an den Triazinrest gebunden ist, zum Beispiel Cl oder eine Gruppe 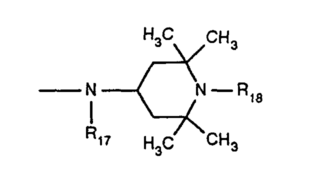 und die Endgruppe, die an den Aminorest gebunden ist, zum Beispiel Wasserstoff oder eine Gruppe

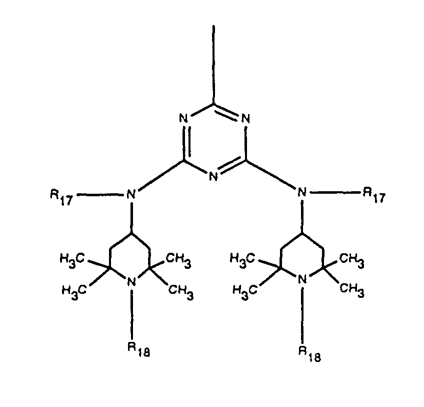

Bevorzugt ist ein Stabilisatorgemisch, worin R₁ Wasserstoff ist, R₂ Ethylen bedeutet und n₁ eine Zahl von 2 bis 25 darstellt.

Ebenfalls bevorzugt ist ein Stabilisatorgemisch, worin R₃ und R₇ eine direkte Bindung oder eine Gruppe -N(X₁)-CO-X₂-CO-N(X₃)- bedeuten, X₁ und X₃ unabhängig voneinander Wasserstoff oder C₁-C₄-Alkyl sind, X₂ eine direkte Bindung ist, R₄ Wasserstoff, C₁-C₄-Alkyl, OH, C₆-C₁₂-Alkyloxy, C₅-C₈-Cycloalkyloxy, Allyl, Benzyl oder Acetyl ist, R₅ und R₉ C₁-C₂₅-Alkyl oder Phenyl sind, R₆ und R₁₀ Wasserstoff oder C₁-C₄-Alkyl bedeuten, R₈ C₁-C₂₅-Alkyl oder eine Gruppe der Formel IV ist, R₁₁, R₁₃, R₁₄ und R₁₅ C₁-C₄-Alkylen sind, R₁₂ eine direkte Bindung ist und R₁₆ eine der für R₄ angegebenen Bedeutungen besitzt.

Bevorzugt ist auch ein Stabilisatorgemisch, worin die Komponente c) mindestens eine Verbindung der Formel 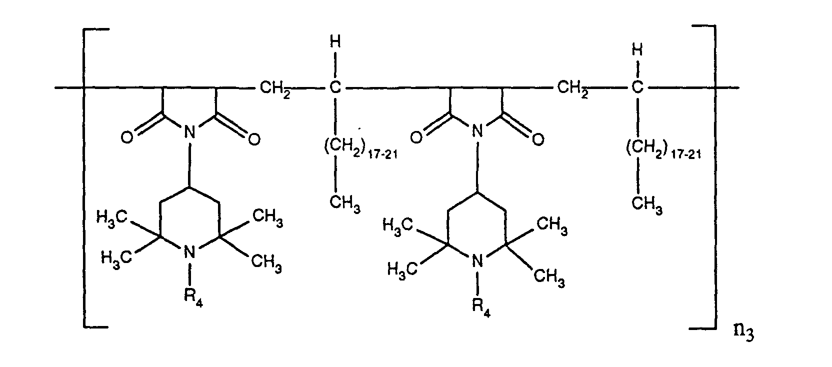 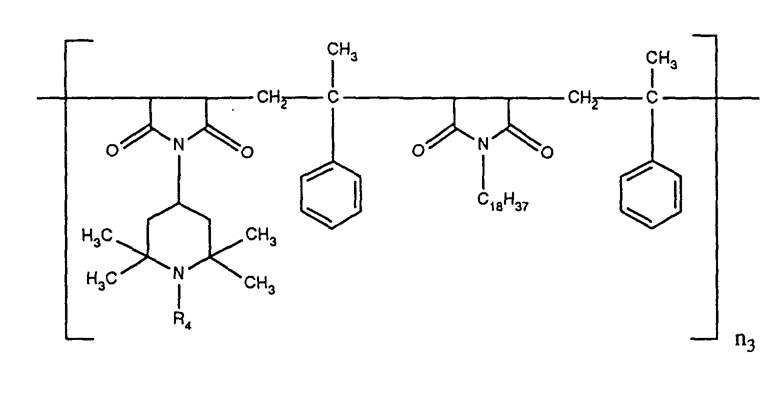 oder 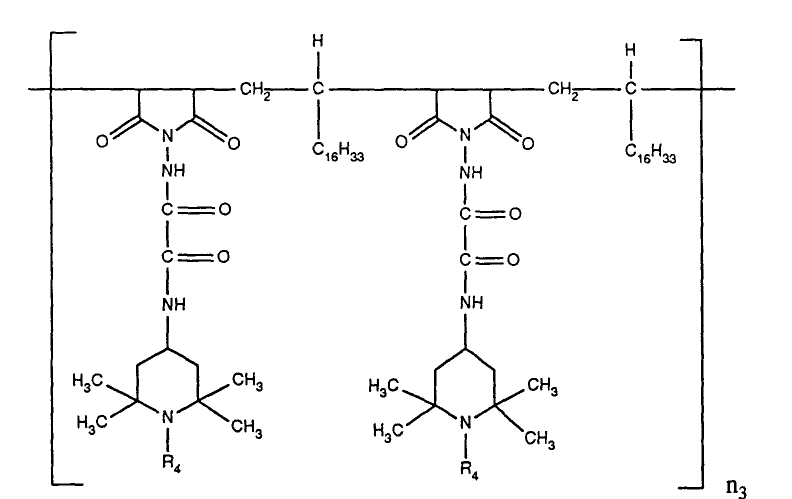 bedeutet, worin R₄ Wasserstoff oder Methyl bedeutet und n₃ eine Zahl von 1 bis 50 ist.

Die Komponente d) ist bevorzugt mindestens eine Verbindung der Formel 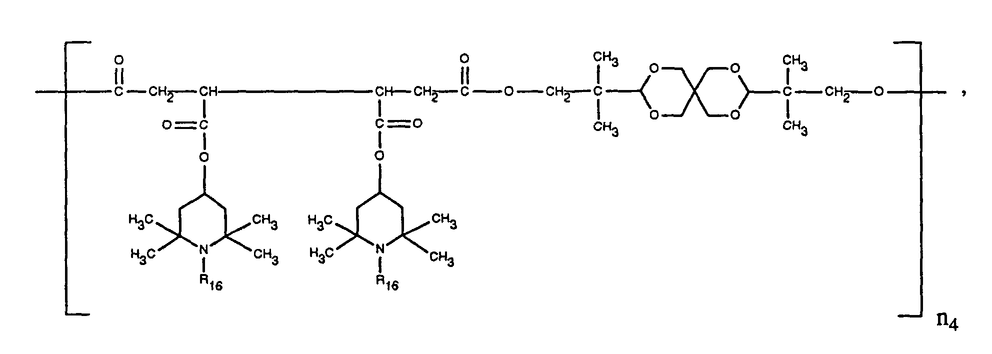 worin R₁₆ Wasserstoff oder Methyl bedeutet und n₄ eine Zahl von 1 bis 50 ist.

Ein Stabilisatorgemisch enthaltend die Komponenten a) und b) ist bevorzugt. Ebenfalls bevorzugt ist ein Stabilisatorgemisch enthaltend die Komponenten a) und c) sowie ein Stabilisatorgemisch enthaltend die Komponenten a) und d). Besonders bevorzugt ist ein Stabilisatorgemisch enthaltend die Komponenten a) und e).

n₁ bedeutet bevorzugt 5 bis 20, n₂ und n₂* 2 bis 10, n₃, n₄ und n₅ 1 bis 10.

Bei folgenden Stabilisatorsystemen handelt es sich um besonders bevorzugte Ausführungsformen der Erfindung:
1) Stabilisatorgemisch enthaltend ®TINUVIN 622 und ®HOSTAVIN N 30,
2) Stabilisatorgemisch enthaltend ®TINUVIN 622 und ®UVINUL 5050 H,
3) Stabilisatorgemisch enthaltend ®TINUVIN 622 und ®LICHTSCHUTZSTOFF UV 31,
4) Stabilisatorgemisch enthaltend ®TINUVIN 622 und ®LUCHEM B 18,
5) Stabilisatorgemisch enthaltend ®TINUVIN 622 und ®MARK LA 63,
6) Stabilisatorgemisch enthaltend ®TINUVIN 622 und ®MARK LA 68 und
7) Stabilisatorgemisch enthaltend ®TINUVIN 622 und ®UVASORB HA 88.

Das erfindungsgemässe Stabilisatorgemisch eignet sich zum Stabilisieren von organischen Materialien gegen thermischen, oxidativen oder lichtinduzierten Abbau. Beispiele für derartige Materialien sind:
1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE).
   Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:
   a) radikalisch (gewöhnlich bei hohem Druck und hoher Temperatur).
   b) mittels Katalysator, wobei der Katalysator gewöhnlich ein oder mehrere Metalle der Gruppe IVb, Vb, VIb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder π- oder σ-koordiniert sein können. Diese Metallkomplexe können frei oder auf Träger fixiert sein, wie beispielsweise auf aktiviertem Magnesiumchlorid, Titan(III)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen Ia, IIa und/oder IIIa sind. Die Aktivatoren können beipielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbomen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.
4. Kohlenwasserstoffharze (z.B. C₅-C₉) inklusive hydrierte Modifikationen davon (z.B. Klebrigmacherharze) und Mischungen von Polyalkylenen und Stärke.
5. Polystyrol, Poly-(p-methylstyrol), Poly-(α-methylstyrol).
6. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.
7. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymere, wie sie z.B. als sogenannte ABS-, MBS-, ASA- oder AES-Polymere bekannt sind.
8. Halogenhaltige Polymere, wie z.B. Polychloropren, Chlorkautschuk, chloriertes und bromiertes Copolymer aus Isobutylen-Isopren (Halobutylkautschuk), chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
9. Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
10. Copolymere der unter 9) genannten Monomeren untereinander oder mit anderen ungesättigten Monomeren, wie z.B. Acrylnitril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
12. Homo- und Copolymere von cyclischen Ethern, wie Polyalkylenglykole, Polyethylenoxyd, Polypropylenoxyd oder deren Copolymere mit Bisglycidylethern.
13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
14. Polyphenylenoxide und -sulfide und deren Mischungen mit Styrolpolymeren oder Polyamiden.
15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylen-isophthalamid. Block-Copolymere der vorstehend genanntenPolyamide mit Polyolefinen, Olefin-Copolymeren, Ionomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").
17. Polyharnstoffe, Polyimide, Polyamid-imide, Polyetherimide, Polyesterimide, Polyhydantoine und Polybenzimidazole.
18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethem mit Hydroxylendgruppen ableiten; ferner mit Polycarbonaten oder MBS modifizierte Polyester.
19. Polycarbonate und Polyestercarbonate.
20. Polysulfone, Polyethersulfone und Polyetherketone.
21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
22. Trocknende und nicht-trocknende Alkydharze.
23. Ungesättigte Polyesterharze, die sich von Copolyestern gsättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
24. Vernetzbare Acrylharze, die sich von substituierten Acrylsäureestern ableiten, wie z.B. von Epoxyacrylaten, Urethan-acrylaten oder Polyester-acrylaten.
25. Alkydharze, Polyesterharze und Acrylatharze, die mit Melaminharzen, Harnstoffharzen, Isocyanaten, Isocyanuraten, Polyisocyanaten oder Epoxidharzen vernetzt sind.
26. Vernetzte Epoxidharze, die sich von aliphatischen, cycloaliphatischen, heterocyclischen oder aromatischen Glycidylverbindungen ableiten, z.B. Produkte von Bisphenol-Adiglycidylethern, Bisphenol-F-diglycidylethern, die mittels üblichen Härtern wie z.B. Anhydriden oder Aminen mit oder ohne Beschleunigern vernetzt werden.
27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
28. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO, PBT/PC/ABS oder PBT/PET/PC.
29. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als Spinnpräparationen Anwendung finden, sowie deren wässrige Emulsionen.
30. Wässrige Emulsionen natürlicher oder synthetischer Kautschuke, wie z.B. Naturkautschuk-Latex oder Latices von carboxylierten Styrol-Butadien-Copolymeren.

Ein weiterer Gegenstand der Erfindung ist daher eine Zusammensetzung enthaltend ein gegen oxidativen, thermischen oder lichtinduzierten Abbau empfindliches organisches Material und ein erfindungsgemässes Stabilisatorgemisch.

Bei dem organischen Material handelt es sich vorzugsweise um synthetische Polymere, insbesondere solche aus den oben angegebenen Gruppen. Polyolefine sind bevorzugt und Polyethylen, Polypropylen und deren Copolymere sind besonders bevorzugt.

Die Komponenten des erfindungsgemässen Stabilisatorsystems können einzeln oder miteinander vermischt dem zu stabilisierenden Material zugesetzt werden. Dabei können die Komponenten unabhängig voneinander in Mengen von 0,01 bis 4,99 % eingesetzt werden mit der Bedingung, dass die Gesamtmenge an Komponente a) und Komponente b), c), d) oder e) 0,02 bis 5 %, bezogen auf das Gesamtgewicht des zu stabilisierenden Materials beträgt.

Bevorzugt beträgt die Gesamtmenge an Komponente a) und Komponente b), c), d) oder e) 0,05 bis 3 %, insbesondere 0,05 bis 2 % oder 0,05 bis 1%, bezogen auf das Gesamtgewicht des zu stabilisierenden Materials.

Das Gewichtsverhältnis der Komponenten a) zur Komponenten b), c), d) oder e) beträgt bevorzugt 20:1 bis 1:20, insbesondere 10:1 bis 1:10, beispielsweise 1:5 bis 5:1.

Die Einarbeitung des erfindungsgemässen Stabilisatorgemisches bzw. der Einzelkomponenten in das organische Material kann nach bekannten Methoden erfolgen, beispielsweise vor oder während der Formgebung oder durch Aufbringen der gelösten oder dispergierten Verbindungen auf das organische Material, gegebenenfalls unter nachträglichem Verdunsten des Lösungsmittels. Die einzelnen Komponenten des erfindungsgemässen Stabilisatorgemisches können als Pulver, Granulat oder auch in Form eines Masterbatches, der diese beispielsweise in einer Konzentration von 2,5 bis 25 Gew.-% enthält, den zu stabilisierenden Materialien zugesetzt werden.

Falls gewünscht, können die Komponenten des erfindungsgemässen Stabilisatorsystems vor der Einarbeitung in der Schmelze miteinander vermischt werden (melt-blending).

Das erfindungsgemässe Stabilisatorsystem oder dessen Komponenten können vor oder während der Polymerisation oder vor der Vernetzung zugegeben werden.

Die so stabilisierten Materialien können in verschiedenster Form angewendet werden, z.B. als Folien, Fasern, Bändchen, Formmassen, Profile oder als Bindemittel für Lacke, Klebstoffe oder Kitte.

Die stabilisierten organischen Materialien der Erfindung können zusätzlich auch verschiedene herkömmliche Additive enthalten, wie beispielsweise:

### 1. Antioxidantien

1.1. Alkylierte Monophenole, z.B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Ditert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, lineare oder in der Seitenkette verzweigte Nonylphenole wie z.B. 2,6-Di-nonyl-4-methylphenol, 2,4-Dimethyl-6-(1'-methyl-undec-1'yl)-phenol, 2,4-Dimethyl-6-(1'-methyl-heptadec-1'-yl)-phenol, 2,4-Dimethyl-6-(1'methyl-tridec-1'-yl)-phenol und Mischungen davon.

1.2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.

1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tertbutyl-4-hydroxyanisol, 3,5-Di-tert-butyl-4-hydroxyphenyl-stearat, Bis(3,5-di-tert-butyl-4-hydroxyphenyl)adipat.

1.4. Tocopherole, z.B. α-Tocopherol, β-Tocopherol, γ-Tocopherol, δ-Tocopherol und Mischungen davon (Vitamin E).

1.5. Hydroxylierte Thiodiphenylether, z.B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis-(6-tert-butyl-2-methylphenol), 4,4'-Thio-bis(3,6-di-sec.-amylphenol), 4,4'-Bis(2,6-dimethyl-4-hydroxyphenyl)-disulfid.

1.6. Alkyliden-Bisphenole, z.B. 2,2'-Methylen-bis(6-tert-butyl-4-methylphenol), 2,2'-Methylen-bis(6-tert-butyl-4-ethylphenol), 2,2'-Methylen-bis[4-methyl-6-(α-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis-(4,6-di-tert-butylphenol), 2,2'-Ethyliden-bis(6-tert-butyl-4-isobutylphenol), 2,2'-Methylen-bis[6-(α-methylbenzyl)-4-nonylphenol], 2,2'-Methylen-bis[6-(α,α-dimethylbenzyl)-4-nonylphenol], 4,4'-Methylen-bis(2,6-di-tert-butylphenol), 4,4'-Methylen-bis(6-tert-butyl-2-methylphenol), 1,1-Bis(5-tert-butyl-4-hydroxy-2-methylphenyl)-butan, 2,6-Bis(3-tert-butyl-5-methyl-2-hydroxybenzyl)-4-methylphenol, 1,1,3-Tris(5-tert-butyl-4-hydroxy-2-methylphenyl)-butan, 1,1-Bis(5-tert-butyl-4-hydroxy-2-methyl-phenyl)-3-n-dodecylmercaptobutan, Ethylenglycol-bis[3,3-bis(3'-tert-butyl-4'-hydroxyphenyl)-butyrat], Bis(3-tert-butyl-4-hydroxy-5-methyl-phenyl)-dicyclopentadien, Bis[2-(3'-tert-butyl-2'-hydroxy-5'-methyl-benzyl)-6-tert-butyl-4-methyl-phenyl]-terephthalat, 1,1-Bis(3,5-dimethyl-2-hydroxyphenyl)-butan, 2,2-Bis(3,5-di-tert-butyl-4-hydroxyphenyl)-propan, 2,2-Bis(5-tertbutyl-4-hydroxy-2-methylphenyl)-4-n-dodecylmercapto-butan, 1,1,5,5-Tetra-(5-tertbutyl-4-hydroxy-2-methylphenyl)-pentan.

1.7. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tridecyl-4-hydroxy-3,5-di-tert-butylbenzyl-mercaptoacetat, Tris(3,5-di-tert-butyl-4-hydroxybenzyl)-amin, Bis(4-tert-butyl-3-hydroxy-2,6-dimethylbenzyl)-dithioterephthalat, Bis(3,5-di-tert-butyl-4-hydroxybenzyl)-sulfid, Isooctyl-3,5-di-tert-butyl-4-hydroxybenzyl-mercaptoacetat.

1.8. Hydroxybenzylierte Malonate, z.B. Dioctadecyl-2,2-bis(3,5-di-tert-butyl-2-hydroxybenzyl)-malonat, Di-octadecyl-2-(3-tert-butyl-4-hydroxy-5-methylbenzyl)-malonat, Didodecylmercaptoethyl-2,2-bis(3,5-di-tert-butyl-4-hydroxybenzyl)-malonat, Di-[4-(1,1,3,3-tetramethylbutyl)-phenyl]-2,2-bis(3,5-di-tert-butyl-4-hydroxybenzyl)-malonat.

1.9. Hydroxybenzyl-Aromaten, z.B. 1,3,5-Tris(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris(3,5-di-tert-butyl-4-hydroxybenzyl)-phenol.

1.10. Triazinverbindungen, z.B. 2,4-Bis-octylmercapto-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tert-butyl-4-hydroxyphenoxy)-1,2,3-triazin, 1,3,5-Tris(3,5-di-tert-butyl-4-hydroxybenzyl)-isocyanurat, 1,3,5-Tris(4-tert-butyl-3-hydroxy-2,6-dimethylbenzyl)-isocyanurat, 2,4,6-Tris(3,5-di-tert-butyl-4-hydroxyphenylethyl)-1,3,5-triazin, 1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat.

1.11. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.

1.12. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.

1.13. Ester der β-(3,5-Di-tert-butyl-4-hydroxyphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.14. Ester der β-(5-tert-Butyl-4-hydroxy-3-methylphenyl)-propionsäure mit ein- oder -mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.15. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.16. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.17. Amide der β-(3,5-Di-tert-butyl-4-hydroxyphenyl)-propionsäure, wie z.B. N,N'-Bis (3,5-di-tert-butyl-4-hydroxyphenylpropionyl)-hexamethylendiamin, N,N'-Bis(3,5-di-tertbutyl-4-hydroxyphenylpropionyl)-trimethylendiamin, N,N'-Bis(3,5-di-tert-butyl-4-hydroxyphenylpropionyl)-hydrazin.

1.18. Ascorbinsäure (Vitamin C).

1.19. Aminische Antioxidantien, wie z.B. N,N'-Di-isopropyl-p-phenylendiamin, N,N'-Di-sec-butyl-p-phenylendiamin, N,N'-Bis(1,4-dimethyl-pentyl)-p-phenylendiamin, N,N'-Bis(1-ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(naphthyl-2)-p-phenylendiamin, N-Isopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-p-phenylendiamin, 4-(p-Toluol-sulfonamido)-diphenylamin, N,N'-Dimethyl-N,N'-di-sec-butyl-p-phenylendiamin, Diphenylamin, N-Allyldiphenylamin, 4-Isopropoxy-diphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tertoctyldiphenylamin, 4-n-Butylaminophenol, 4-Butyrylamino-phenol, 4-Nonanoylaminophenol, 4-Dodecanoylamino-phenol, 4-Octadecanoylamino-phenol, Di-(4-methoxyphenyl)-amin, 2,6-Di-tert-butyl-4-dimethylamino-methyl-phenol, 2,4'-Diamino-diphenylmethan, 4,4'-Diamino-diphenylmethan, N,N,N',N'-Tetramethyl-4,4'-diamino-diphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/Isohexyl-diphenylaminen, Gemische aus mono- und dialkylierten tert-Butyldiphenylaminen, 2,3-Dihydro-3,3-dimethyl-4H-1,4-benzothiazin, Phenothiazin, Gemisch aus mono- und dialkylierten tert-Butyl/tert-Octyl-phenothiazinen, Gemisch aus mono- und dialkylierten tert-Octyl-phenothiazinen, N-Allylphenothiazin, N,N,N',N'-Tetraphenyl-1,4-diaminobut-2-en, N,N-Bis-(2,2,6,6-tetramethyl-piperidin-4-yl-hexamethylendiamin, Bis-(2,2,6,6-tetramethylpiperidin-4-yl)-sebacat, 2,2,6,6-Tetramethylpiperidin-4-on, 2,2,6,6-Tetramethylpiperidin-4-ol.

2. UV-Absorber und Lichtschutzmittel

2.1. 2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl- 2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tertamyl-2'-hydroxyphenyl)-benzotriazol, 2-(3',5'-Bis(α,α-dimethylbenzyl)-2'-hydroxyphenyl)-benzotriazol, Mischung aus 2-(3'-tert-Butyl-2'-hydroxy-5'-(2-octyloxycarbonylethyl)-phenyl)-5-chlor-benzotriazol, 2-(3'-tert-Butyl-5'-[2-(2-ethylhexyloxy)-carbonylethyl]-2'hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, und 2-(3'tert-Butyl-2'-hydroxy-5'-(2-isooctyloxycarbonylethyl)phenyl-benzotriazol, 2,2'-Methylenbis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; 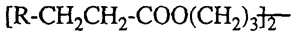 mit R = 3'-tert-Butyl-4'-hydroxy-5'-2H-benzotriazol-2-yl-phenyl.

2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis(4-tert-butylbenzoyl)-resorcin, Benzoylresorcin, 3,5-Di-tert-butyl-4-hydroxybenzoesäure-2,4-di-tertbutylphenylester, 3,5-Di-tert-butyl-4-hydroxybenzoesäurehexadecylester, 3,5-Di-tertbutyl-4-hydroxybenzoesäure-octadecylester, 3,5-Di-tert-butyl-4-hydroxybenzoesäure-2-methyl-4,6-di-tert-butylphenylester.

2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxy-zimtsäure-methylester, N-(β-Carbomethoxy-β-cyanovinyl)-2-methyl-indolin.

2.5. Nickelverbindungen, wie z.B. Nickelkomplexe des 2,2'-Thio-bis[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.

2.6. Sterisch gehinderte Amine, wie z.B. Bis(2,2,6,6-tetramethyl-piperidin-4-yl)-sebacat, Bis(2,2,6,6-tetramethyl-piperidin-4-yl)-succinat, Bis(1,2,2,6,6-pentamethylpiperidin-4-yl)-sebacat, Bis(1-octyloxy-2,2,6,6-tetramethylpiperidin-4-yl)-sebacat, n-Butyl-3,5-ditert-butyl-4-hydroxybenzyl-malonsäure-bis(1,2, 2,6,6-pentamethylpiperidyl)-ester, Kondensationsprodukt aus 1-Hydroxyethyl-2,2,6,6-tetramethyl-4-hydroxypiperidin und Bemsteinsäure, Kondensationsprodukt aus N,N'-Bis(2,2,6,6-Tetramethyl-4-piperidyl)-hexamethylendiamin und 4-tert-Octylamino-2,6-dichlor-1,3,5-s-triazin, Tris(2,2,6,6-tetramethyl-4-piperidyl)-nitrilotriacetat, Tetrakis(2,2,6,6-tetramethyl-4-piperidyl)-1,2,3,4-butantetraoat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis(1-octyloxy-2,2,6,6-tetramethylpiperidyl)-sebacat, Bis(1-octyloxy-2,2,6,6-tetramethylpiperidyl)-succinat, Kondensationsprodukt aus N,N'-Bis(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-nbutylamino-2,2,6,6-tetramethylpiperidyl)-1,3,5-triazin und 1,2-Bis(3-aminopropylamino)-ethan, Kondensationsprodukt aus 2-Chlor-4,6-di-(4-n-butylamino-1,2,2,6,6-pentamethylpiperidyl)-1,3,5-triazin und 1,2-Bis(3-aminopropylamino)-äthan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, Gemisch von 4-Hexadecyloxy- und 4-Stearyloxy-2,2,6,6-tetramethylpiperidin, Kondenstionsprodukt aus N,N'-Bis(2,2,6,6-tetramethyl-4-piperidyl)-hexamethylendiamin und 4-Cyclohexylamino-2,6-dichlor-1,3,5-triazin, Kondensationsprodukt aus 1,2-Bis(3-aminopropylamino)-ethan und 2,4,6-trichlor-1,3,5-triazin sowie 4-Butylamino-2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,9-Tetramethyl-2-cycloundecyl-1-oxa-3,8-diaza-4-oxospiro[4,5]decan und Epichlorhydrin.

2.7. Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'-di-tert-butyl-oxanilid, 2-Ethoxy-2'-ethyl-oxanilid, N,N'-Bis(3-dimethylaminopropyl)-oxalamid, 2-Ethoxy-5-tertbutyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.

2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis-(2,4-dimethylphenyl)-1,3,5-triazin, 2-[2-Hydroxy-4-(2-hydroxy-3-butyloxy-propyloxy)-phenyl]-4,6-bis(2,4-dimethylphenyl)-1,3,5-triazin, 2-[2-Hydroxy-4-(2-hydroxy-3-octyloxy-propyloxy)phenyl]-4,6-bis(2,4-dimethylphenyl)-1,3,5-triazin, 2-[4-(dodecyloxy/tridecyloxy-2-hydroxypropoxy)-2-hydroxy-phenyl]-4,6-bis(2,4-dimethylphenyl)-1,3,5-triazin, 2-[2-Hydroxy-4-(2-hydroxy-3-dodecyloxy-propoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin.

3. Metalldesaktivatoren, wie z.B. N,N'-Diphenyloxalsäurediamid, N-Salicylal-N'-salicyloylhydrazin, N,N'-Bis(salicyloyl)-hydrazin, N,N'-Bis(3,5-di-tert-butyl-4-hydroxyphenylpropionyl)-hydrazin, 3-Salicyloylamino-1,2,4-triazol, Bis(benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid.

4. Phosphite und Phosphonite, wie z.B. Triphenylphosphit, Diphenylalkylphosphite, Phenyldialkylphosphite, Tris(nonylphenyl)-phosphit, Trilaurylphosphit, Trioctadecylphosphit, Distearyl-pentaerythritdiphosphit, Tris(2,4-di-tert-butylphenyl)-phosphit, Diisodecylpentaerythrit-diphosphit, Bis(2,4-di-tert-butylphenyl)-pentaerythritdiphosphit, Bis-(2,6-di-tertbutyl-4-methylphenyl)-pentaerythritdiphosphit, Bis-isodecyloxy-pentaerythritdiphosphit, Bis(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis(2,4-di-tert-butylphenyl)-4,4'-biphenylen-diphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz-[d,g]-1,3,2-dioxaphosphocin, Bis(2,4-di-tert-butyl-6-methylphenyl)-methylphosphit, Bis-(2,4-di-tert-butyl-6-methylphenyl)-ethylphosphit.

5. Hydroxylamine wie z.B. N,N-Dibenzylhydroxylamin, N,N-diethylhydroxylamin, N,N-Dioctylhydroxylamin, N,N-Dilaurylhydroxylamin, N,N-Ditetradecylhydroxylamin, N,N-Dihexadecylhydroxylamin, N,N-Dioctadecylhydroxylamin, N-Hexadecyl-N-octadecylhydroxylamin, N-Heptadecyl-N-octadecylhydroxylamin, N,N-Dialkylhydroxylamin aus hydrierten Talgfettaminen.

6. Nitrone wie z.B. N-Benzyl-alpha-phenyl-nitron, N-Ethyl-alpha-methyl-nitron, N-Octyl-alpha-heptyl-nitron, N-Lauryl-alpha-undecyl-nitron, N-Tetradecyl-alpha-tridecylnitron, N-Hexadecyl-alpha-pentadecyl-nitron, N-Octadecyl-alpha-heptadecyl-nitron, N-Hexadecyl-alpha-heptadecyl-nitron, N-Ocatadecyl-alpha-pentadecyl-nitron, N-Heptadecyl-alpha-heptadecyl-nitron, N-Octadecyl-alpha-hexadecyl-nitron, Nitrone abgeleitet von N,N-Dialkylhydroxylaminen hergestellt aus hydrierten Talgfettaminen.

7. Thiosynergisten wie z.B. Thiodipropionsäure-di-laurylester oder Thiodipropionsäuredi-stearylester.

8. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis(β-dodecylmercapto)-propionat.

9. Polyamidstabilisatoren, wie z.B. Kupfersalze in Kombination mit Jodiden und/oder Phosphorverbindungen und Salze des zweiwertigen Mangans.

10. Basische Co-Stabilisatoren, wie z.B. Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.

11. Nukleierungsmittel, wie z.B. anorganische Stoffe wie z.B. Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z.B. 4-tert-Butylbenzoesäure, Adipinsäure, Diphenylessigsäure, Natriumsuccinat oder Natriumbenzoat; polymere Verbindungen wie z.B. ionische Copolymerisate ("Ionomere").

12. Füllstoffe und Verstärkungsmittel, wie z.B. Calciumcarbonat, Silikate, Glasfasern, Glaskugeln, Asbest, Talk, Kaolin, Glimmer, Bariumsulfat, Metalloxide und -hydroxide, Ruß, Graphit, Holzmehl und Mehle oder Fasern anderer Naturprodukte, synthetische Fasern.

13. Sonstige Zusätze, wie z.B. Weichmacher, Gleitmittel, Emulgatoren, Pigmente, Rheologieadditive, Katalysatoren, Verlaufshilfsmittel, Optische Aufheller, Flammschutzmittel, Antistatika, Treibmittel.

14. Benzofuranone bzw. Indolinone, wie z.B. in US-A-4 325 863, US-A-4 338 244, US-A-5 175 312, US-A-5 216 052, US-A-5 252 643, DE-A-4 316 611, DE-A-4 316 622, DE-A-4 316 876, EP-A-0 589 839 oder EP-A-0 591 102 beschrieben, oder 3-[4-(2-Acetoxyethoxy)phenyl]-5,7-di-tert-butyl-benzofuran-2-on, 5,7-Di-tert-butyl-3-[4-(2-stearoyloxyethoxy)phenyl]-benzofuran-2-on, 3,3'-Bis[5,7-di-tert-butyl-3-(4-[2-hydroxyethoxy]-phenyl)-benzofuran-2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxy-phenyl)-5,7-di-tert-butyl-benzofuran-2-on.

Das Gewichtsverhältnis von erfindungsgemässem Stabilisatorgemisch zu den herkömmlichen Additiven kann beispielsweise 1:0,5 bis 1:5 betragen.

Ein weiterer Gegenstand der Erfindung ist die Verwendung des erfindungsgemässen Stabilisatorgemisches zum Stabilisieren von organischem Material gegen oxidativen, thermischen oder lichtinduzierten Abbau.

Die mit dem erfindungsgemässem Stabilisatorsystem stabilisierten organischen Materialien zeichnen sich nicht nur durch eine wesentlich verbesserte Lichtbeständigkeit sondern auch zum Teil durch eine verbesserte thermische Beständigkeit aus.

Die vorangehenden Ausführungen gelten in entsprechender Weise auch für folgendes Stabilisatorgemisch, welches ebenfalls ein Gegenstand der vorliegenden Erfindung ist:

Stabilisatorgemisch enthaltend eine Verbindung der Formel A-I, 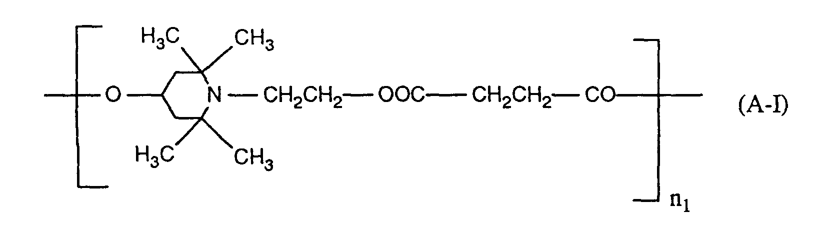 worin n₁ eine Zahl von 2 bis 25, insbesondere 2 bis 15, bedeutet, und eine Verbindung der Formel F-I, 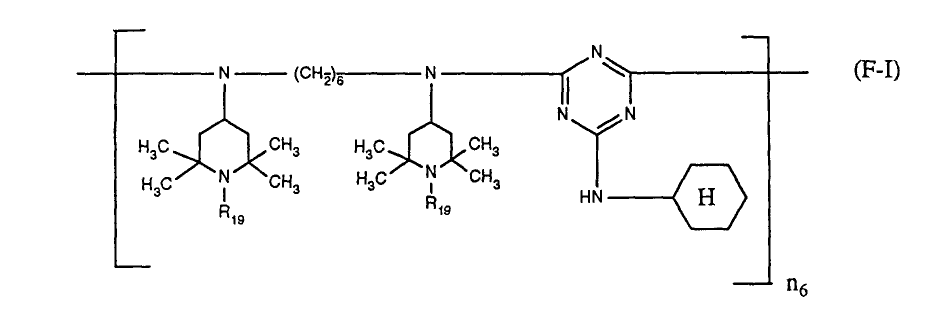 worin R₁₉ Wasserstoff, C₁-C₈-Alkyl, O⁻, -CH₂CN, C₃-C₆-Alkenyl, C₇-C₉-Phenylalkyl, am Phenylrest durch C₁-C₄-Alkyl substituiertes C₇-C₉-Phenylalkyl oder C₁-C₈-Acyl ist und n₆ eine Zahl von 2 bis 25, insbesondere 2 bis 10, bedeutet.

R₁₉ bedeutet bevorzugt Wasserstoff oder C₁-C₄-Alkyl, insbesondere Wasserstoff.

Die einzelnen Komponenten dieses Stabilisatorgemisches sind bekannt und teilweise im Handel erhältlich. Sie können ferner auch in Analogie zu den in US-A-4 233 412 und US-A-4 086 204 beschriebenen Verfahren hergestellt werden.

Ein Stabilisatorgemisch enthaltend ®TINUVIN 622 und ®DASTIB 1082 ist bevorzugt.

Die Bedeutungen der Endgruppen, die in den Verbindungen der Formeln A-I und F-I die freien Valenzen absättigen, sind abhängig von den zur Herstellung benutzten Verfahren.

Die Endgruppen können auch nach der Herstellung der Verbindungen noch modifiziert werden.

Für die Endgruppen der Formel A-I gelten die für die Endgruppen der Verbindungen der Formel I gemachten Bemerkungen in entsprechender Weise.

Erfolgt die Herstellung der Verbindung der Formel F-I durch Umsetzung einer Verbindung der Formel 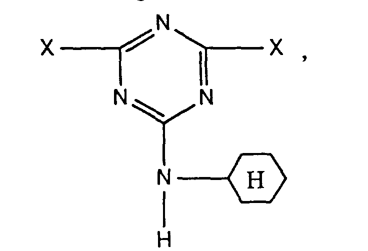 worin X beispielsweise Halogen, insbesondere Chlor, bedeutet, mit einer Verbindung der Formel 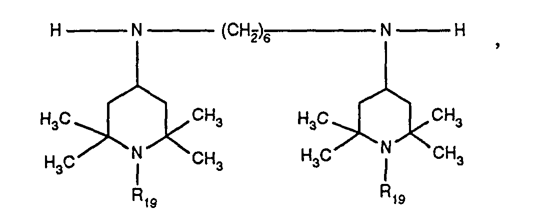 so ist die Endgruppe, die an den Diaminorest gebunden ist, Wasserstoff oder 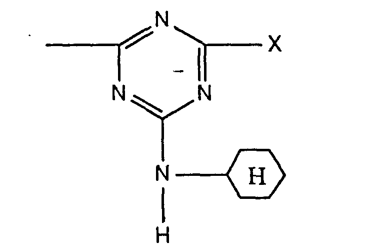 und die Endgruppe, die an den Triazinrest gebunden ist, X oder

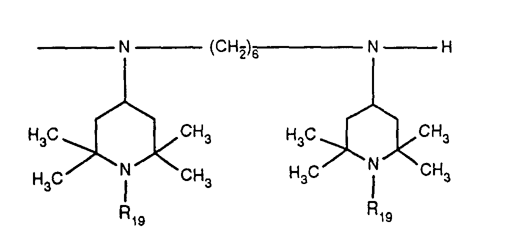

Bedeutet X ein Halogen, so ist es vorteilhaft, dieses nach beendeter Umsetzung z.B. durch -OH oder eine Aminogruppe auszutauschen. Als Beispiele für Aminogruppen seien genannt: Pyrrolidin-1-yl, Morpholino, -NH₂, -N(C₁-C₈-Alkyl)₂ und -NR*(C₁-C₈-Alkyl), worin R* Wasserstoff oder eine Gruppe der Formel 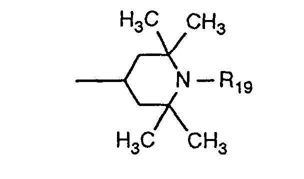 ist.

Die folgenden Beispiele erläutern die Erfindung weiter. Alle Prozentangaben beziehen sich auf das Gewicht, sofern nichts anderes angegeben ist.

### In den Beispielen 14 verwendete Lichtschutzmittel:

### Verbindung A:

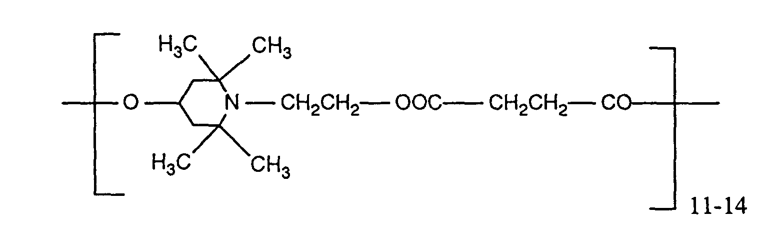

### Verbindung B:

### Gemisch der Verbindungen

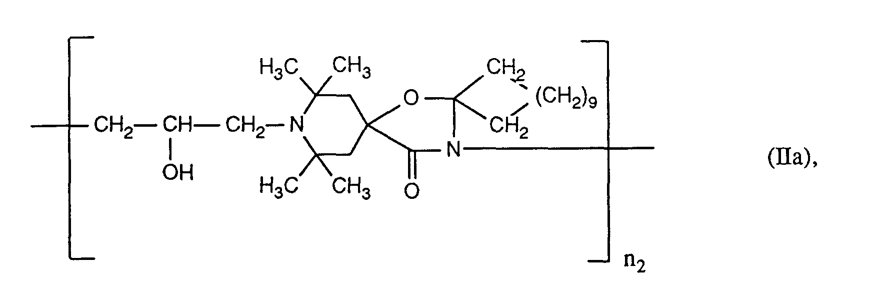

und 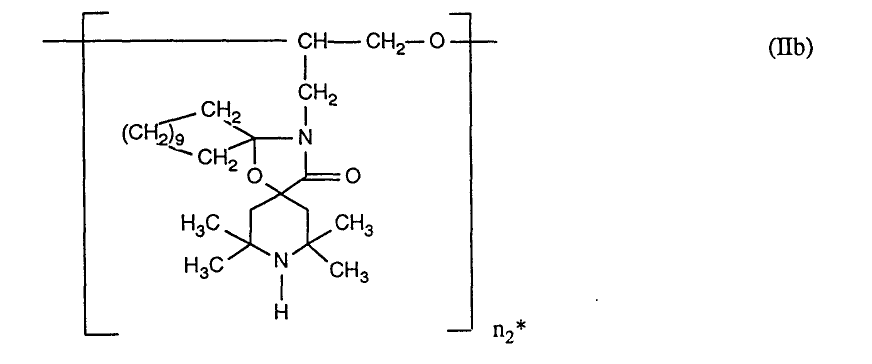 worin der Mittelwert von n₂ ca. 3,9 bzw. von n₂* ca. 4,2 beträgt und das Verhältnis von (IIa) zu (IIb) ca. 4:1 ist.

### Verbindung C-1:

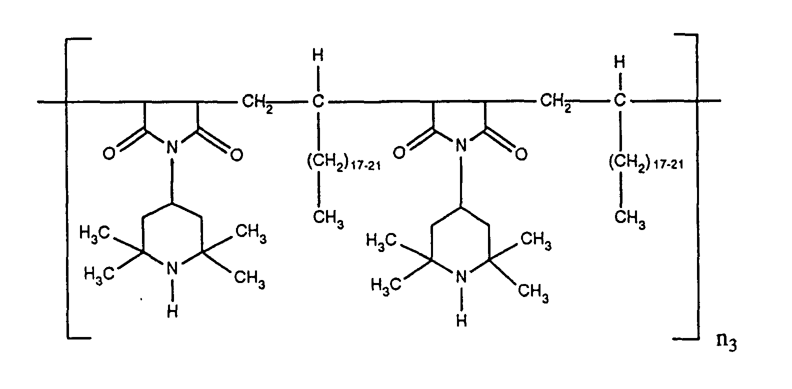

Der Mittelwert von n₃ beträgt 3,2.

### Verbindung C-2:

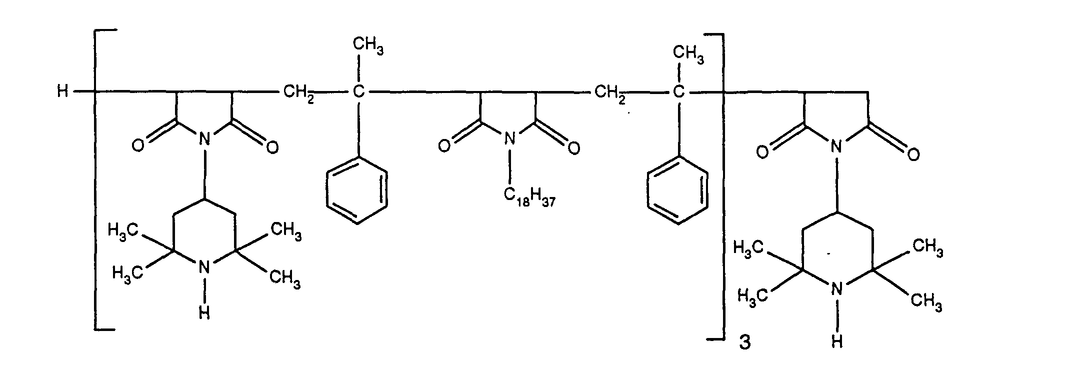

### Verbindung D-1:

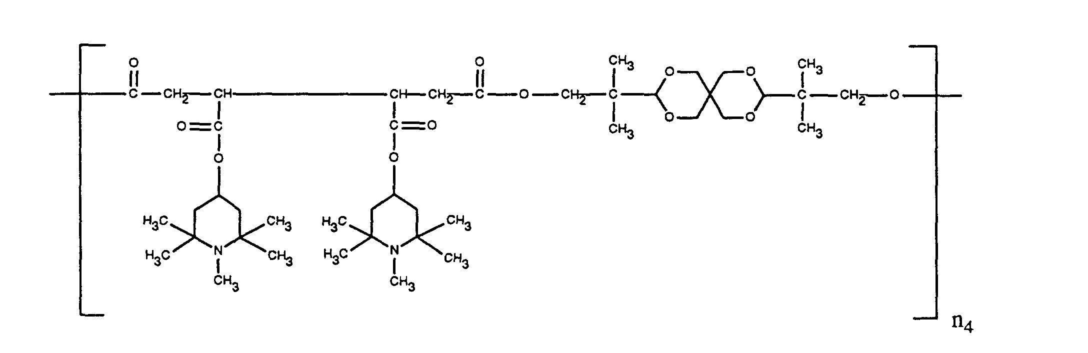

Der Mittelwert von n₄ beträgt 2,5.

### Verbindung D-2:

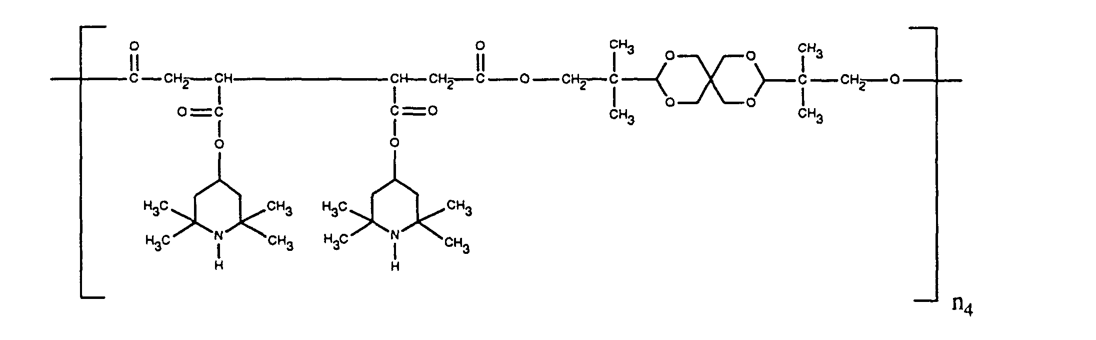

Der Mittelwert von n₄ beträgt 2,5.

### Verbindung E:

Produkt erhältlich durch Umsetzung eines durch Reaktion eines Polyamins der Formel 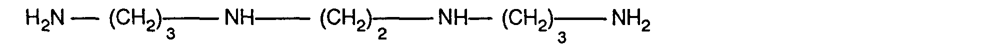 mit Cyanursäurechlorid erhaltenen Produktes mit einer Verbindung der Formel

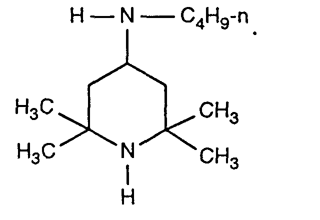

### Verbindung F:

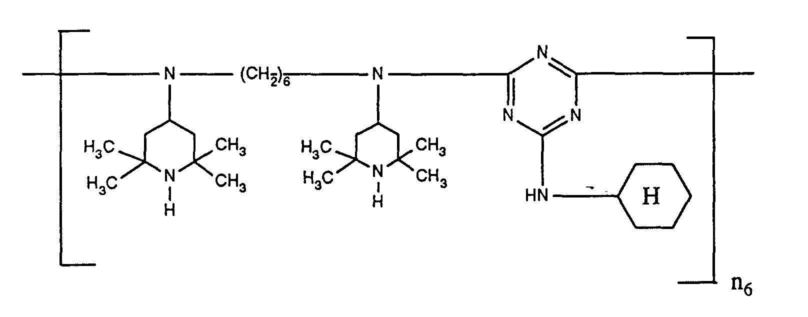

Der Mittelwert von n₆ beträgt 4,4.

### Beispiel 1: Lichtschutzwirkung in Polypropylenbändchen.

100 Teile Polypropylenpulver [Schmelzindex: 2,4 g/10 min (230°C, 2160 g)] werden in einem Trommelmischer mit 0,05 Teilen Pentaerythrityl-tetrakis[β-(3,5-di-tert-butyl-4-hydroxyphenyl)propionat], 0,05 Teilen Tris[(2,4-di-tert-butylphenyl]phosphit, 0,1 Teilen Ca-Stearat und der in der Tabelle 1 angegebenen Menge Lichtschutzmittel gemischt und anschliessend in einem Extruder bei einer Temperatur von 180 bis 220°C granuliert.

Das erhaltene Granulat wird in einem zweiten Extruder mit Breitschlitzdüse (Temperatur 220 bis 260°C) zu einer Folie verarbeitet, die in Bändchen geschnitten wird, welche anschliessend bei erhöhter Temperatur im Verhältnis von 1:5,25 verstreckt und aufgewickelt werden (Titer der Bändchen: 700 bis 900 den; Reissfestigkeit: 5,5 bis 6,5 g/den).

Die so hergestellten Polypropylenbändchen werden spannungslos auf Probenträger aufgebracht und in einem WEATHER-OMETER Ci 65 bewittert Nach verschiedenen Zeiten werden je 5 Prüflinge entnommen und ihre Reissfestigkeit bestimmt. Als Mass für die Schutzwirkung der einzelnen Lichtschutzmittel gilt die Belichtungszeit bis zum Rückgang der Reissfestigkeit der Bändchen auf 50% des Ausgangswertes. Die erhaltenen Werte sind in der Tabelle 1 aufgeführt.

**Tabelle 1:**

| Lichtschutzmittel | Stunden WEATHER-OMETER Ci 65 bis 50% Reissfestigkeit |
|---|---|
| | |
| Ohne | 550 |
| | |
| 0,1 % Verbindung A | 2640 |
| | |
| 0,1 % Verbindung E | 3050 |
| | |
| 0,05 % Verbindung A und 0,05 % Verbindung E | >3100 |

### Beispiel 2: Lichtschutzwirkung in Polypropylenbändchen.

Die Proben werden in Analogie zu dem im Beispiel 1 beschriebenen Verfahren hergestellt Die Verstreckung der Bändchen beträgt 1:5,25 . Die Versuchsergebnisse sind in Tabelle 2 aufgeführt.

**Tabelle 2:**

| Lichtschutzmittel | Stunden WEATHER-OMETER Ci 65 bis 50% Restreissfestigkeit | |
|---|---|---|
| | 0,1 % Lichtschutzmittel | 0,2 % Lichtschutzmittel |
| Ohne | 570 | 570 |
| | | |
| Verbindung A | 1730 | 2900 |
| | | |
| Verbindung C-1 | 1900 | 3100 |
| | | |
| Verbindung C-2 | 1250 | 1500 |
| | | |
| Verbindung A und | | |
| Verbindung C-1 | | |
| im Verhältnis 1:1 | 2050 | >3200 |
| | | |
| Verbindung A und | | |
| Verbindung C-2 | | |
| im Verhältnis 1:1 | 2000 | >3200 |

### Beispiel 3: Lichtschutzwirkung in Polypropylen-Blockcopolymer-Folien.

100 Teile Polypropylen-Blockcopolymer-Pulver werden mit 0,05 Teilen Pentaerythrityltetrakis-[3-(3,5-di-tert-butyl-4-hydroxyphenyl)-propionat, 0,10 Teilen Tris-(2,4-di-tert-butylphenyl)-phosphit, 0,1 Teilen Ca-Stearat und den in Tabelle 3 angegebenen Lichtschutzmitteln im Brabenderplastographen bei 200°C während 10 Minuten homogenisiert. Die so erhaltene Masse wird möglichst rasch dem Kneter entnommen und in einer Kniehebelpresse zu einer 2-3 mm dicken Platte gepresst. Ein Teil des erhaltenen Rohpresslings wird ausgeschnitten und zwischen zwei Hochglanz-Hartaluminiumfolien mit einer hydraulischen Laborpresse während 6 Minuten bei 260°C zu einer 0,5 mm dicken Folie gepresst, die unverzüglich in einer wassergekühlten Presse abgekühlt wird. Aus dieser 0,5 mm Folie werden nun Abschnitte von je 60 mm x 25 mm gestanzt und in einem WEATHER-OMETER Ci 65 (Schwarztafeltemperatur 63 ± 2°C, keine Beregnung) belichtet. In regelmässigen Zeitabständen werden diese Prüflinge aus dem Belichtungsapparat entnommen und in einem IR-Spektrophotometer auf ihren Carbonylgehalt geprüft. Die Zunahme der Carbonylextinktion bei der Belichtung ist ein Mass für den photooxidativen Abbau des Polymeren und ist erfahrungsgemäss mit einem Abfall der mechanischen Eigenschaften verbunden. Die Ergebnisse sind in Tabelle 3 aufgeführt.

**Tabelle 3:**

| Lichtschutzmittel | Stunden WEATHER-OMETER Ci 65 bis 0,2 Carbonylextinktion |
|---|---|
| 0,2 % Verbindung A | 2040 |
| | |
| 0,2 % Verbindung B | 1710 |
| | |
| 0,2 % Verbindung C-1 | 505 |
| | |
| 0,2 % Verbindung E | 2400 |
| | |
| 0,2 % Verbindung F | 1550 |
| | |
| 0,1 % Verbindung A und | |
| 0,1 % Verbindung B | 2360 |
| | |
| 0,1 % Verbindung A und | |
| 0,1 % Verbindung C-1 | 1540 |
| | |
| 0,1 % Verbindung A und | |
| 0,1 % Verbindung E | 3330 |
| | |
| 0,1 % Verbindung A und | |
| 0,1 % Verbindung F | 2660 |

### Beispiel 4: Lichtschutzwirkung in Polyethylenfolien hoher Dichte.

100 Teile Polyethylenpulver hoher Dichte (Dichte = 0,965 g/cm³) werden mit 0,033 Teilen Pentaerythrityl-tetrakis[3-(3,5-di-tert-butyl-4-hydroxyphenyl )propionat], 0,066 Teilen Tris[2,4-di-tert-butylphenyl]phosphit, 0,1 Teil Ca-Stearat und den in Tabelle 4 angegebenen Teilen Lichtschutzmittel im Brabenderplastographen bei 180°C während 10 Minuten homogenisiert. Die so erhaltene Masse wird möglichst rasch dem Kneter entnommen und in einer Kniehebelpresse zu einer 2 bis 3 mm dicken Platte gepresst. Ein Teil des erhaltenen Rohpresslings wird ausgeschnitten und zwischen zwei Hochglanz-Hartaluminiumfolien mit einer hydraulischen Laborpresse während 6 Minuten bei 210°C zu einer 0,5 mm dicken Folie gepresst, die unverzüglich in einer wassergekühlten Presse abgekühlt wird. Aus dieser 0,5 mm dicken Folie werden nun Abschnitte von je 60mm x25mm gestanzt und in einem Weather-Ometer Ci 65 (Schwarztafeltemperatur 63±2°C, keine Beregnung) belichtet. In regelmässigen Zeitabständen werden diese Prüflinge aus dem Belichtungsapparat entnommen und in einem IR-Spektrophotometer auf ihren Vinylgruppengehalt geprüft. Die Zunahme der Vinylextinktion (909 cm⁻¹) bei der Belichtung ist ein Mass für den photooxidativen Abbau des Polymeren und ist erfahrungsgemäss mit einem Abfall der mechanischen Eigenschaften verbunden. Die Ergebnisse sind in Tabelle 4 aufgeführt.

**Tabelle 4:**

| Lichtschutzmittel | Vinylextinktion nach 7222 Stunden WEATHER-OMETER Ci 65 |
|---|---|
| Ohne | 0,097 nach 318 Stunden |
| 0,1 % Verbindung A | 0,039 |
| 0,1 % Verbindung B | 0,046 |
| 0,1 % Verbindung C-1 | 0,058 |
| 0,1 % Verbindung C-2 | 0,143 nach 5286 Stunden |
| 0,1 % Verbindung D-1 | 0,040 |
| 0,1 % Verbindung D-2 | 0,040 |
| 0,1 % Verbindung E | 0,054 |
| 0,1 % Verbindung F | 0,051 |
| 0,05 % Verbindung A und 0,05 % Verbindung B | 0,036 |
| 0,05 % Verbindung A und 0,05 % Verbindung C-1 | 0,033 |
| 0,05 % Verbindung A und 0,05 % Verbindung C-2 | 0,039 |
| 0,05 % Verbindung A und 0,05 % Verbindung D-1 | 0,037 |
| 0,05 % Verbindung A und 0,05 % Verbindung D-2 | 0,034 |
| 0,05 % Verbindung A und 0,05 % Verbindung E | 0,037 |
| 0,05 % Verbindung A und 0,05 % Verbindung F | 0,037 |

## Patentansprüche

1. Stabilisatorgemisch enthaltend eine Komponente a) und eine Komponente b), c), d) oder e), wobei
die Komponente a) mindestens eine Verbindung der Formel I ist, 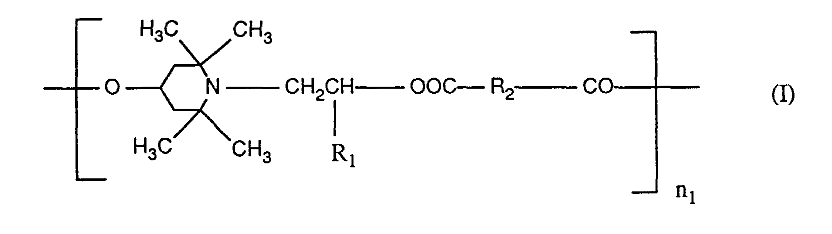 worin
R₁ Wasserstoff oder Methyl bedeutet,
R₂ eine direkte Bindung oder C₁-C₁₀-Alkylen ist und
n₁ eine Zahl von 2 bis 50 darstellt;
die Komponente b) mindestens eine Verbindung der Formeln IIa und IIb ist, 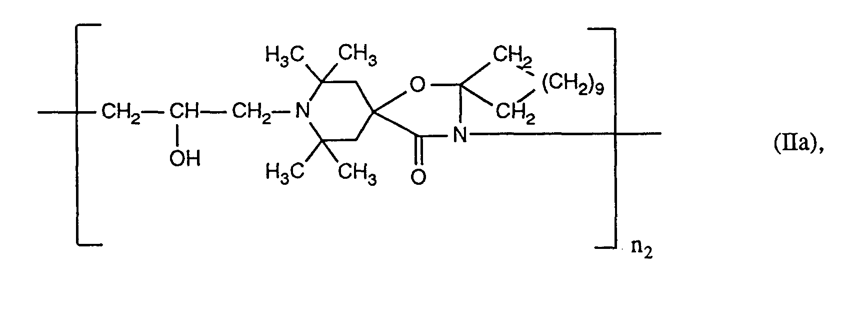 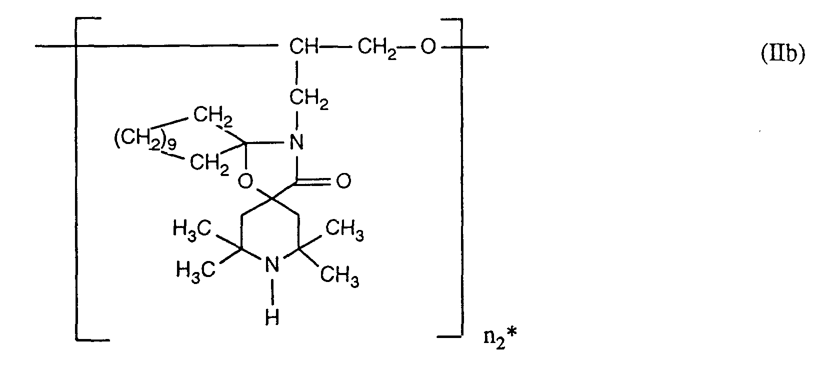 worin n₂ und n₂* eine Zahl von 2 bis 50 sind;
die Komponente c) mindestens eine Verbindung der Formel III ist, 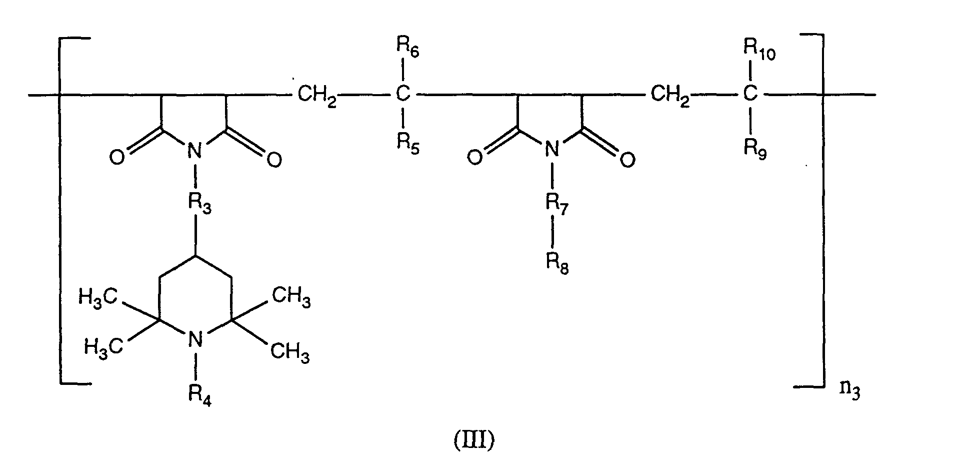 worin R₃ und R₇ unabhängig voneinander eine direkte Bindung oder eine Gruppe -N(X₁)-CO-X₂-CO-N(X₃)- bedeuten, X₁ und X₃ unabhängig voneinander Wasserstoff, C₁-C₈-Alkyl, C₅-C₁₂-Cycloalkyl, Phenyl, C₇-C₉-Phenylalkyl oder eine Gruppe der Formel IV 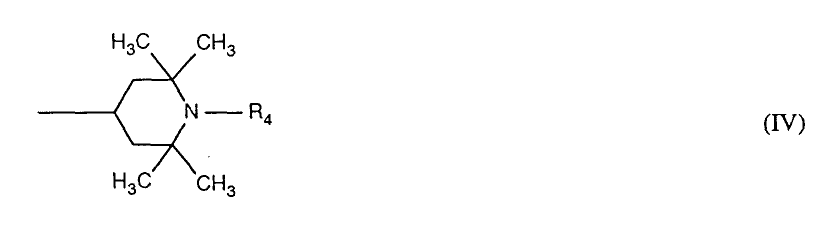 sind, X₂ eine direkte Bindung oder C₁-C₄-Alkylen darstellt,
R₄ Wasserstoff, C₁-C₈-Alkyl, O⁻, -CH₂CN, C₃-C₆-Alkenyl, C₇-C₉-Phenylalkyl, am Phenylrest durch C₁-C₄-Alkyl substituiertes C₇-C₉-Phenylalkyl oder C₁-C₈-Acyl ist,
R₅, R₆, R₉ und R₁₀ unabhängig voneinander Wasserstoff, C₁-C₃₀-Alkyl,
C₅-C₁₂-Cycloalkyl oder Phenyl bedeuten,
R₈ Wasserstoff, C₁-C₃₀-Alkyl, C₅-C₁₂-Cycloalkyl, C₇-C₉-Phenylalkyl, Phenyl oder eine Gruppe der Formel IV darstellt und
n₃ eine Zahl von 1 bis 50 ist;
die Komponente d) mindestens eine Verbindung der Formel V ist, 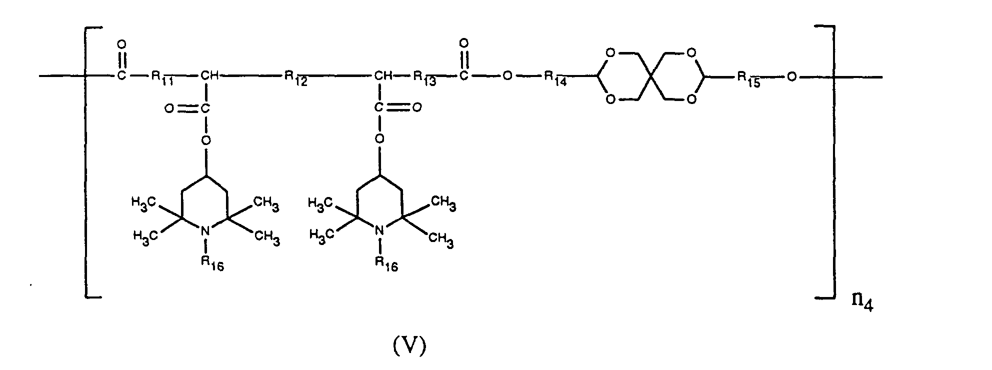 worin R₁₁, R₁₂, R₁₃, R₁₄ und R₁₅ unabhängig voneinander eine direkte Bindung oder C₁-C₁₀-Alkylene sind, R₁₆ eine der für R₄ angegebenen Bedeutungen besitzt und n₄ eine Zahl von 1 bis 50 darstellt; und
die Komponente e) ein Produkt erhältlich durch Umsetzung eines durch Reaktion eines Polyamins der Formel VIa mit Cyanursäurechlorid erhaltenen Produktes mit einer Verbindung der Formel VIb bedeutet, 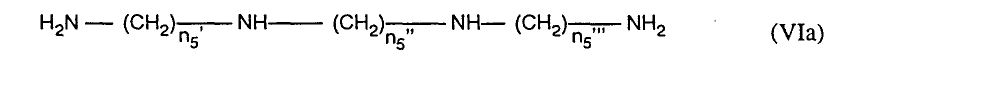 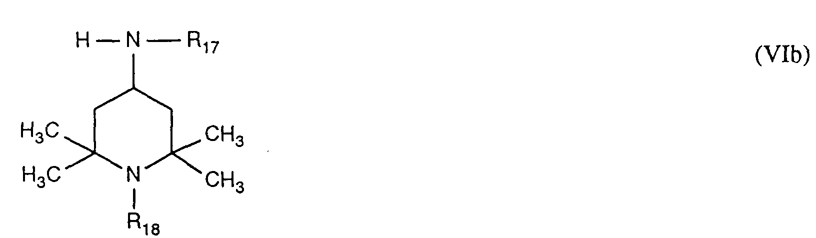 worin n₅', n₅'' und n₅''' unabhängig voneinander eine Zahl von 2 bis 12 sind, R₁₇ Wasserstoff, C₁-C₁₂-Alkyl, C₅-C₁₂-Cycloalkyl, Phenyl oder C₇-C₉-Phenylalkyl ist und R₁₈ eine der für R₄ angegebenen Bedeutungen besitzt.

2. Stabilisatorgemisch gemäss Anspruch 1, worin R₁ Wasserstoff ist, R₂ Ethylen bedeutet und n₁ eine Zahl von 2 bis 25 darstellt.

3. Stabilisatorgemisch gemäss Anspruch 1, worin R₃ und R₇ eine direkte Bindung oder eine Gruppe -N(X₁)-CO-X₂-CO-N(X₃)- bedeuten, X₁ und X₃ unabhängig voneinander Wasserstoff oder C₁-C₄-Alkyl sind, X₂ eine direkte Bindung ist, R₄ Wasserstoff, C₁-C₄-Alkyl, OH, C₆-C₁₂-Alkyloxy, C₅-C₈-Cycloalkyloxy, Allyl, Benzyl oder Acetyl ist, R₅ und R₉ C₁-C₂₅-Alkyl oder Phenyl sind, R₆ und R₁₀ Wasserstoff oder C₁-C₄-Alkyl bedeuten, R₈ C₁-C₂₅-Alkyl oder eine Gruppe der Formel IV ist, R₁₁, R₁₃, R₁₄ und R₁₅ C₁-C₄-Alkylen sind, R₁₂ eine direkte Bindung ist und R₁₆ eine der für R₄ angegebenen Bedeutungen besitzt.

4. Stabilisatorgemisch gemäss Anspruch 1, worin die Komponente c) mindestens eine Verbindung der Formel 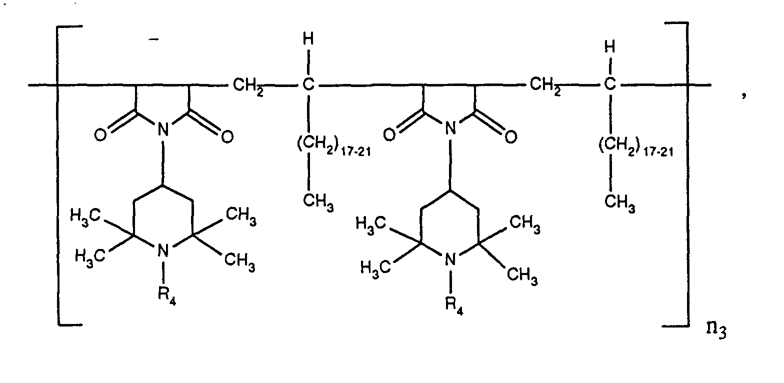 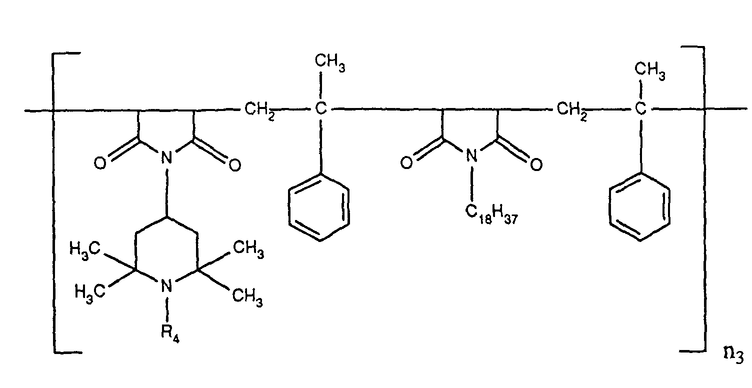 oder 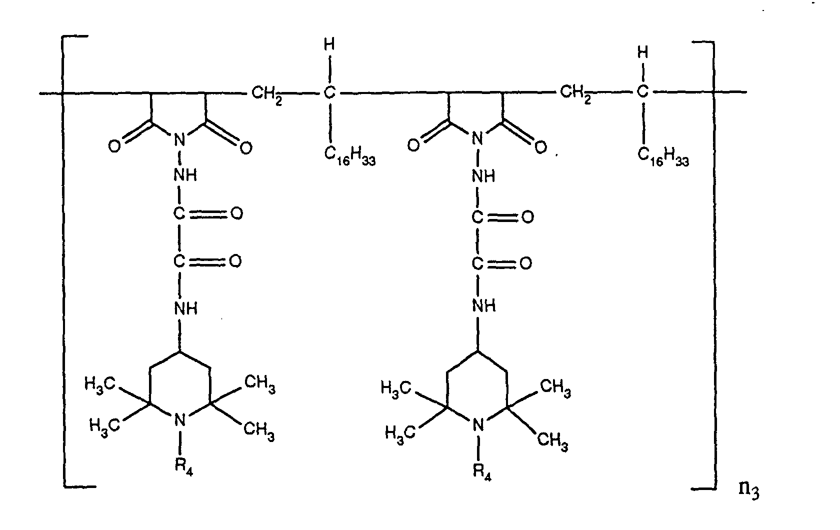 ist, worin R₄ Wasserstoff oder Methyl bedeutet und n₃ eine Zahl von 1 bis 50 ist.

5. Stabilisatorgemisch gemäss Anspruch 1, worin die Komponente d) mindestens eine Verbindung der Formel 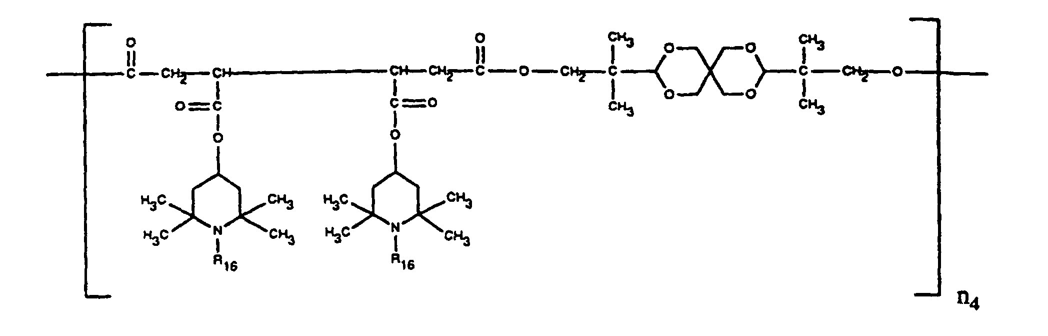 ist, worin R₁₆ Wasserstoff oder Methyl bedeutet und n₄ eine Zahl von 1 bis 50 ist.

6. Stabilisatorgemisch gemäss Anspruch 1, worin n₅', n₅'' und n₅''' unabhängig voneinander eine Zahl von 2 bis 4 sind, R₁₇ C₁-C₄-Alkyl bedeutet und R₁₈ Wasserstoff ist.

7. Stabilisatorgemisch gemäss Anspruch 1, enthaltend die Komponenten a) und b).

8. Stabilisatorgemisch gemäss Anspruch 1, enthaltend die Komponenten a) und c).

9. Stabilisatorgemisch gemäss Anspruch 1, enthaltend die Komponenten a) und d).

10. Stabilisatorgemisch gemäss Anspruch 1, enthaltend die Komponenten a) und e).

11. Ein Stabilisatorgemisch gemäss Anspruch 1, worin Komponente e) eine Verbindung der Formel VI-1, VI-2 oder VI-3 oder ein Gemisch dieser drei Verbindungen ist, 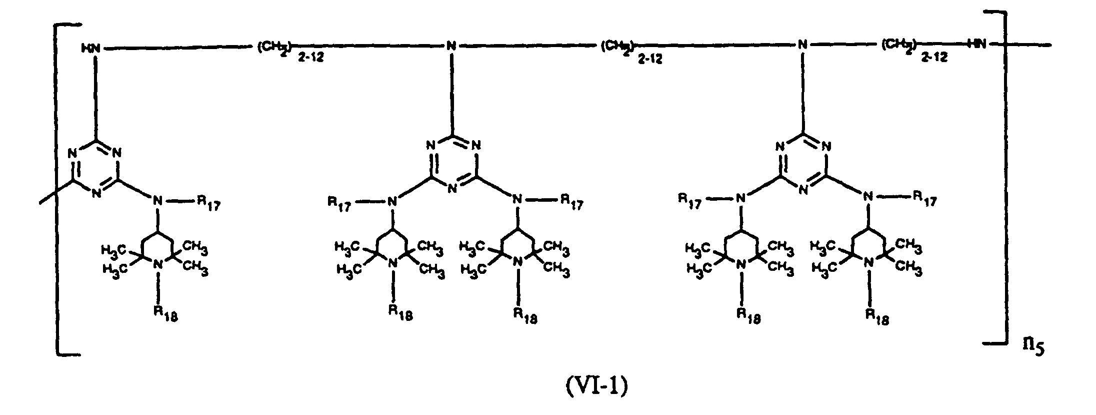 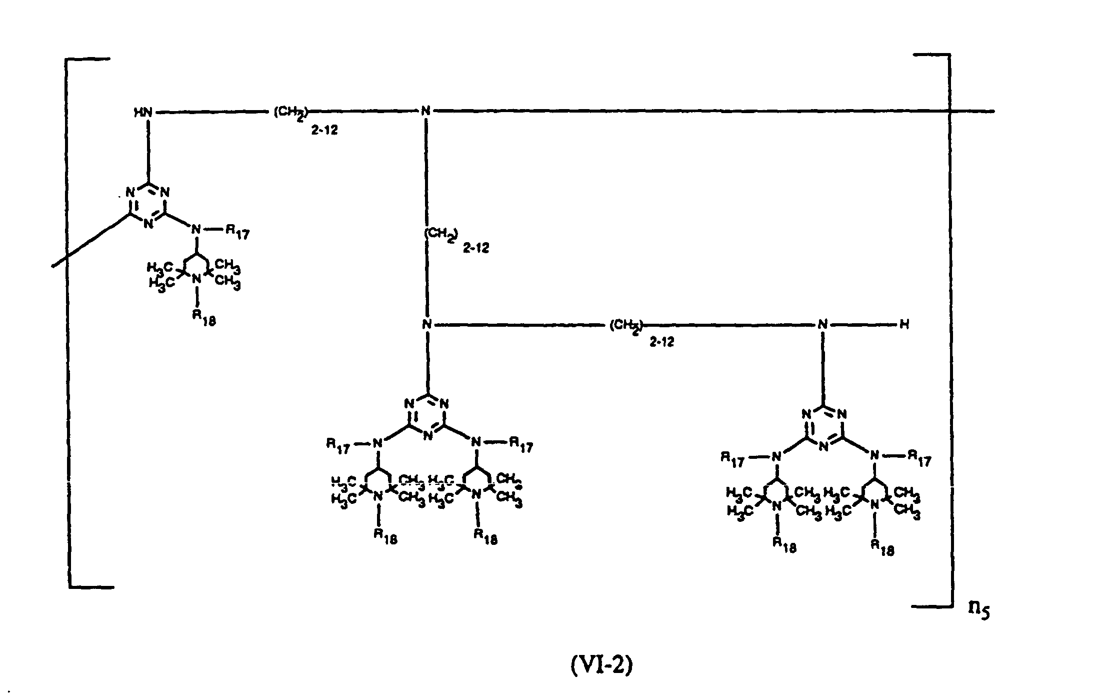 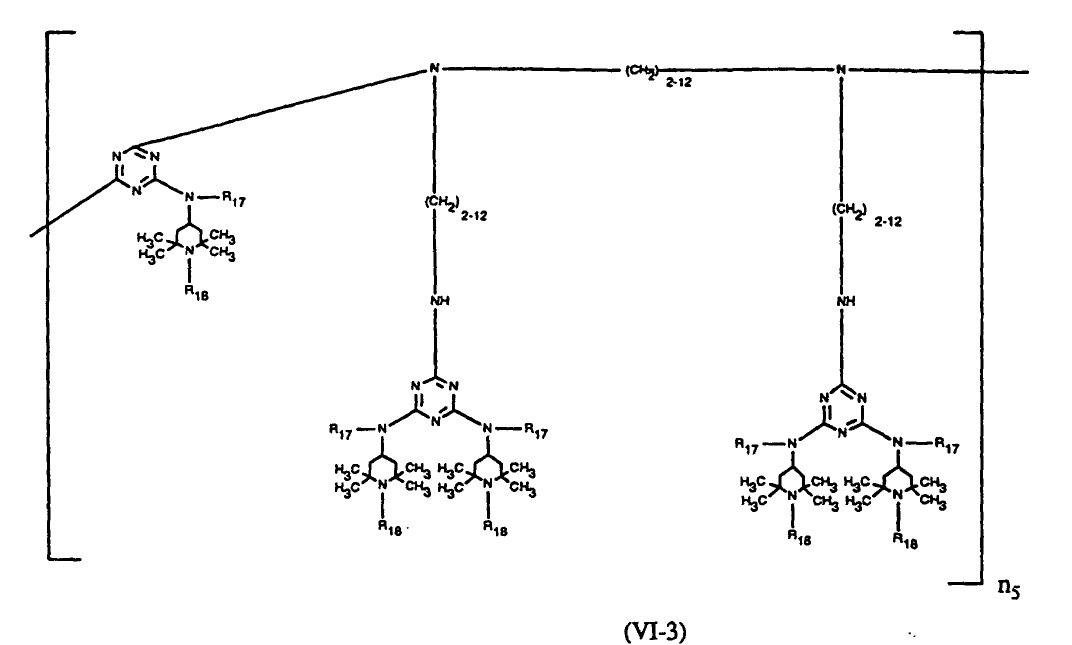 werein n₅ 1 bis 20 ist.

12. Ein Stabilisatorgemisch gemäss Anspruch 1, worin Komponente e) eine Verbindung der Formel 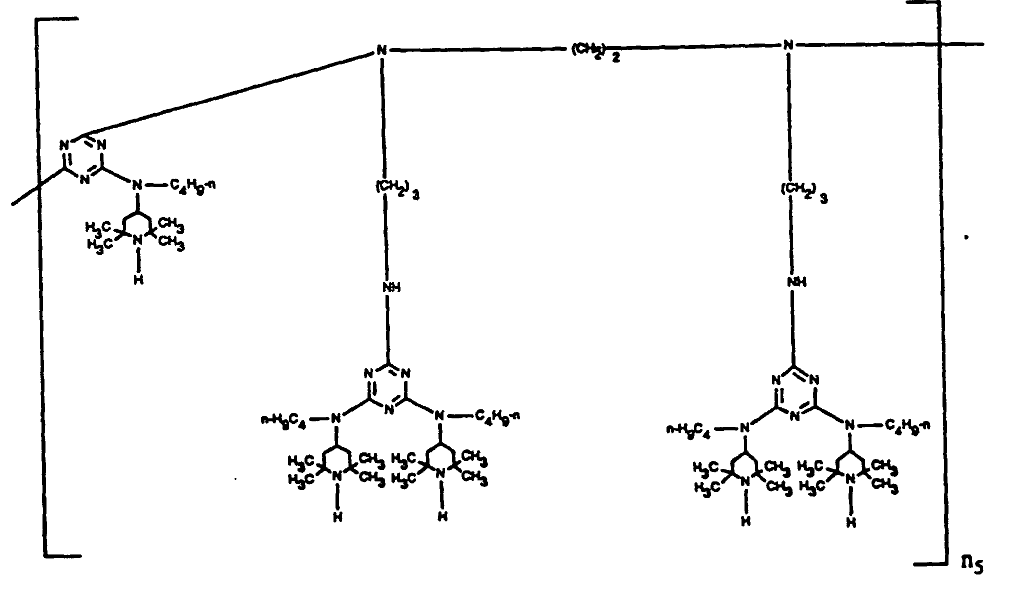 ist, worin n₅ 1 bis 20 ist.

13. Ein Stabilisatorgemisch gemäss Anspruch 1, enthaltend die Komponenten a) und e)
worin R₁ Wasserstoff ist, R₂ Ethylen bedeutet und n₁ eine Zahl von 2 bis 25 darstellt, und
worin Komponente e) eine verbindung der Formel 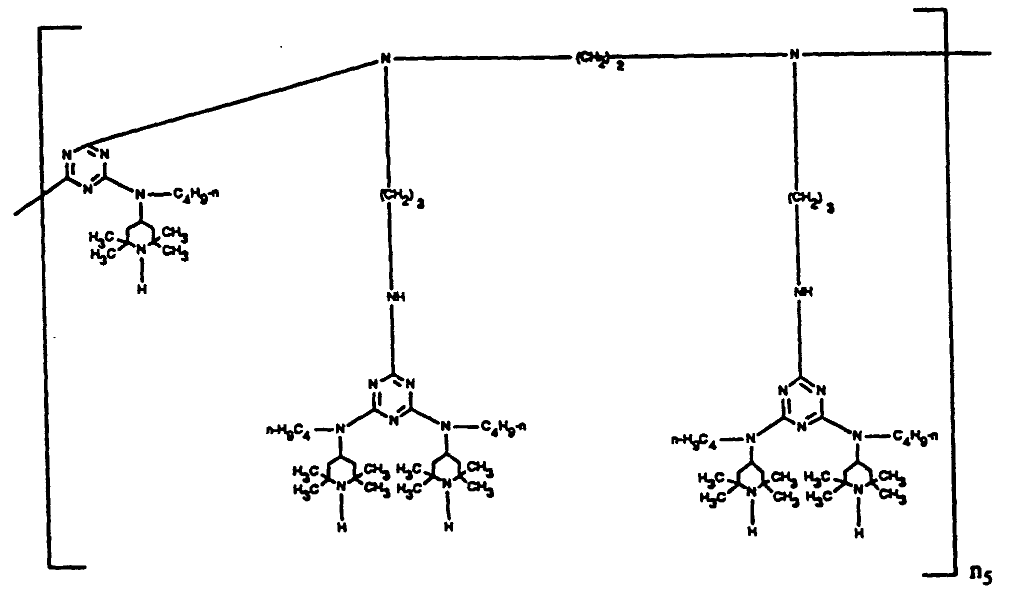 ist, worin n₅ 1 bis 20 ist.

14. Zusammensetzung enthaltend ein gegen oxidativen, thermischen oder lichtinduzierten Abbau empfindliches organisches Material und ein Stabilisatorgemisch gemäss Anspruch 1.

15. Zusammensetzung gemäss Anspruch 14, worin das organische Material ein Polyolefin ist

16. Zusammensetzung gemäss Anspruch 14, worin das organische Material Polyethylen, Polypropylen oder ein Copolymer von Polyethylen oder Polypropylen ist.

17. Verfahren zum Stabilisieren eines gegen oxidativen, thermischen oder lichtinduzierten Abbau empfindlichen organischen Materials, **dadurch gekennzeichnet, dass** in das organische Material ein Stabilisatorgemisch gemäss Anspruch 1 eingearbeitet wird.

18. Stabilisatorgemisch enthaltend eine Verbindung der Formel A-I, 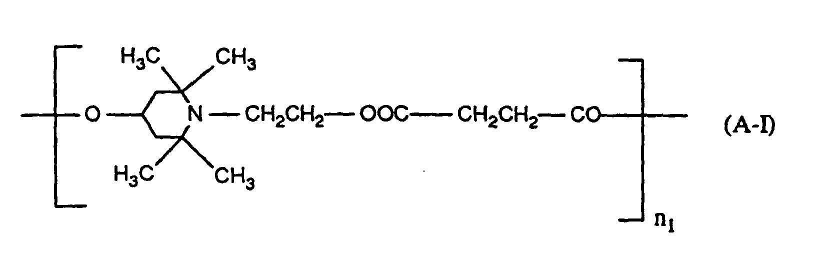 worin n₁ eine Zahl von 2 bis 25 bedeutet, und eine Verbindung der Formel F-I, 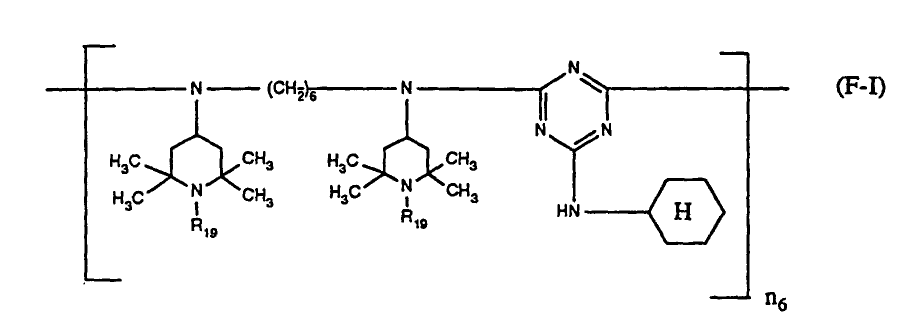 worin R₁₉ Wasserstoff, C₁-C₈-Alkyl, O⁻, -CH₂CN, C₃-C₆-Alkenyl, C₇-C₉-Phenylalkyl, am Phenylrest durch C₁-C₄-Alkyl substituiertes C₇-C₉-Phenylalkyl oder C₁-C₈-Acyl ist und n₆ eine Zahl von 2 bis 25 bedeutet.

## Claims

1. A stabilizer mixture comprising a component a) and a component b), c), d) or e), where
component a) is at least one compound of the formula I 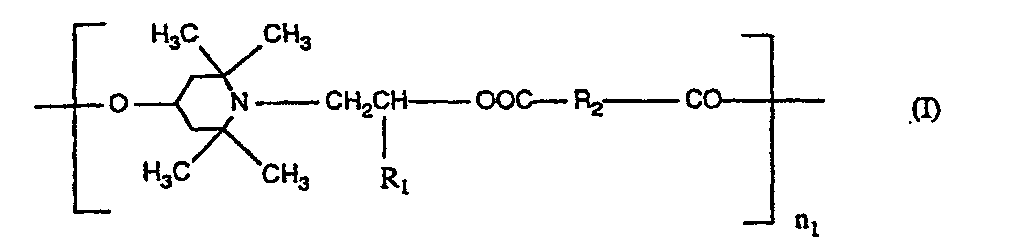 in which
R₁ is hydrogen or methyl,
R₂ is a direct bond or C₁-C₁₀alkylene and
n₁ is a number from 2 to 50;
component b) is at least one compound of the formula IIa or IIb 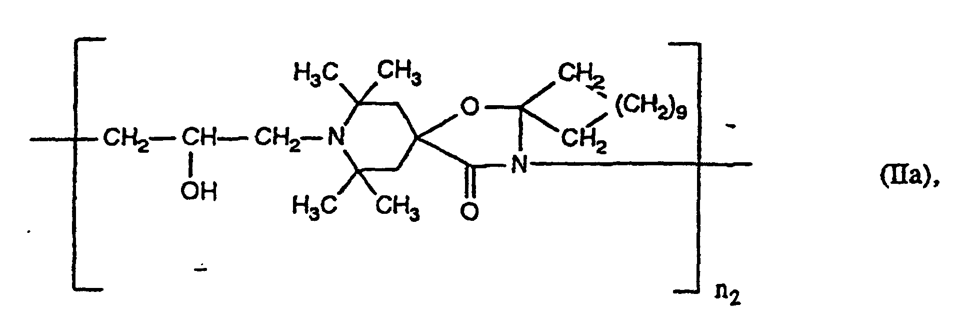 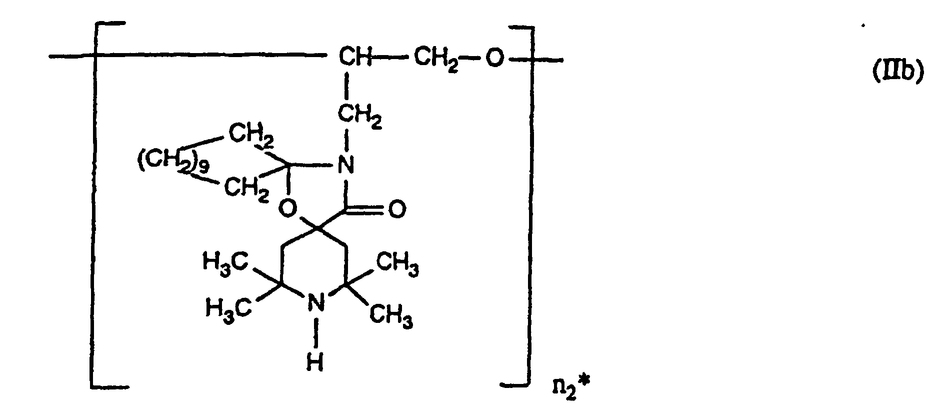 in which n₂ and n₂* are a number from 2 to 50;
component c) is at least one compound of the formula III 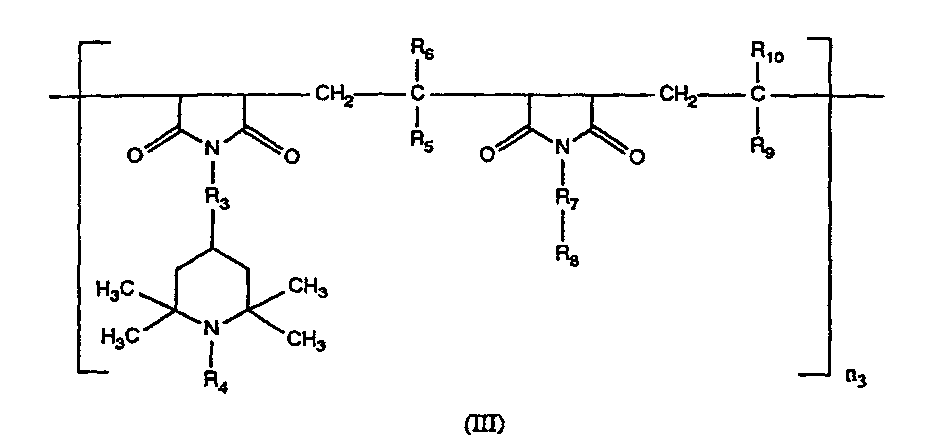 in which R₃ and R₇, independently of one another, are a direct bond or an -N(X₁)-CO-X₂-CO-N(X₃)- group, where X₁ and X₃, independently of one another, are hydrogen, C₁-C₈alkyl, C₅-C₁₂cycloalkyl, phenyl, C₇-C₉phenylalkyl or a group of the formula IV 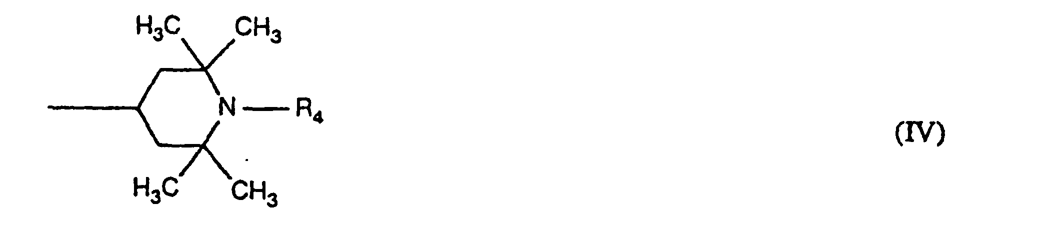 and X₂ is a direct bond or C₁-C₄alkylene,
R₄ is hydrogen, C₁-C₈alkyl, O⁻, -CH₂CN, C₃-C₆alkenyl, C₇-C₉phenylalkyl, C₇-C₉phenylalkyl which is substituted by C₁-C₄alkyl on the phenyl radical, or C₁-C₈acyl,
R₅, R₆, R₉ and R₁₀, independently of one another, are hydrogen, C₁-C₃₀alkyl, C₅-C₁₂cycloalkyl or phenyl,
R₈ is hydrogen, C₁-C₃₀alkyl, C₅-C₁₂cycloalkyl, C₇-C₉phenylalkyl, phenyl or a group of the formula IV, and
n₃ is a number from 1 to 50;
component d) is at least one compound of the formula V 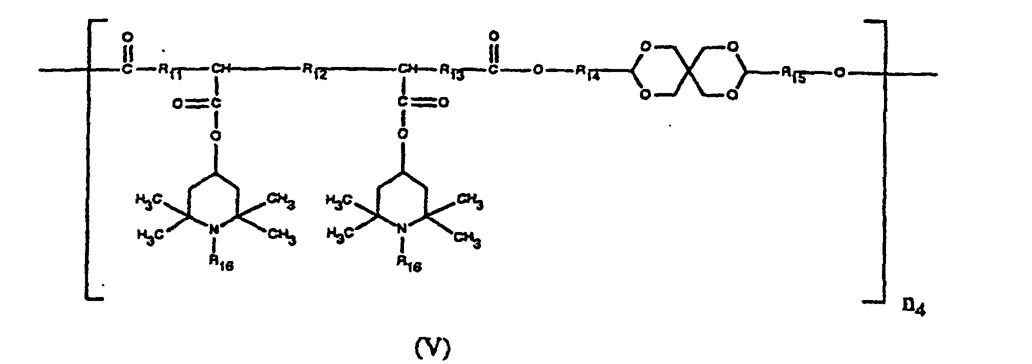 in which R₁₁, R₁₂, R₁₃, R₁₄ and R₁₅, independently of one another, are a direct bond or C₁-C₁₀alkylene, R₁₆ is as defined for R₄, and n₄ is a number from 1 to 50; and
component e) is a product obtained by reacting a product obtained by reacting a polyamine of the formula VIa with cyanuric chloride with a compound of the formula VIb 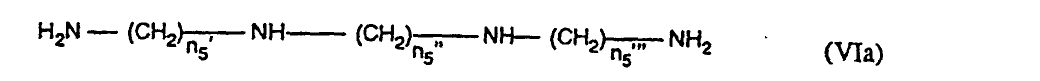 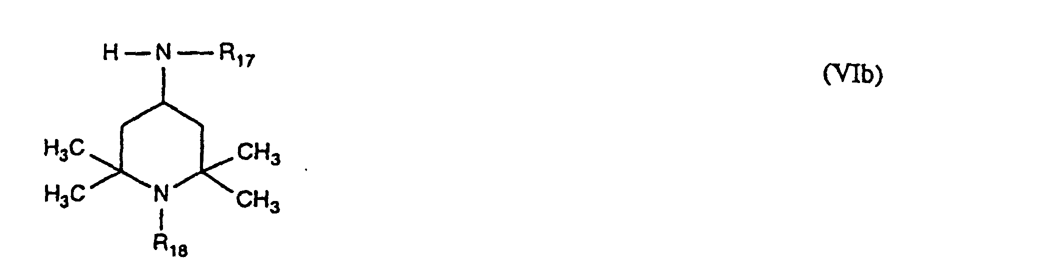 in which n₅', n₅'' and n₅''', independently of one another, are a number from 2 to 12, R₁₇ is hydrogen, C₁-C₁₂alkyl, C₅-C₁₂cycloalkyl, phenyl or C₇-C₉phenylalkyl, and R₁₈ is as defined for R₄.

2. A stabilizer mixture according to claim 1, in which R₁ is hydrogen, R₂ is ethylene and n₁ is a number from 2 to 25.

3. A stabilizer mixture according to claim 1, in which R₃ and R₇ are a direct bond or an -N(X₁)-CO-X₂-CO-N(X₃)- group, where X₁ and X₃, independently of one another, are hydrogen or C₁-C₄alkyl and X₂ is a direct bond, R₄ is hydrogen, C₁-C₄alkyl, OH, C₆-C₁₂alkoxy, C₅-C₈cycloalkoxy, allyl, benzyl or acetyl, R₅ and R₉ are C₁-C₂₅alkyl or phenyl, R₆ and R₁₀ are hydrogen or C₁-C₄alkyl, R₈ is C₁-C₂₅alkyl or a group of the formula IV, R₁₁, R₁₃, R₁₄ and R₁₅ are C₁-C₄alkylene, R₁₂ is a direct bond, and R₁₆ is as defined for R₄.

4. A stabilizer mixture according to claim 1, in which component c) is at least one compound of the formula 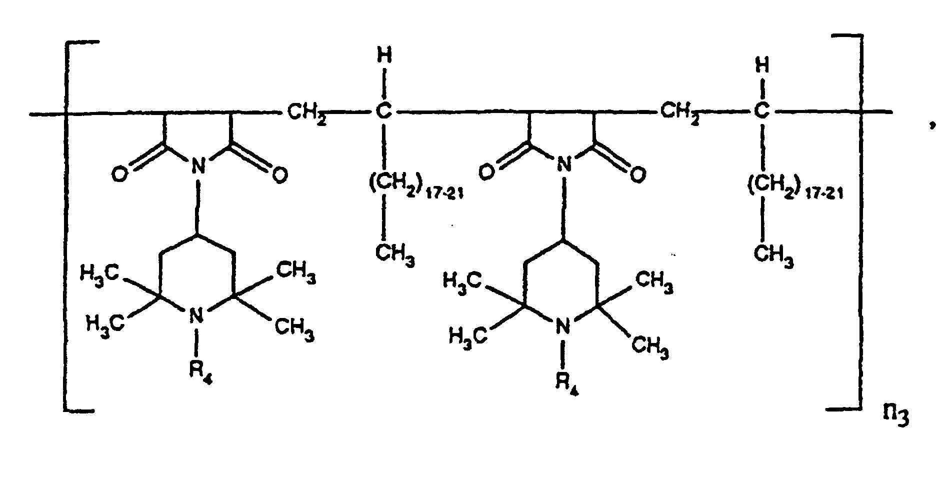 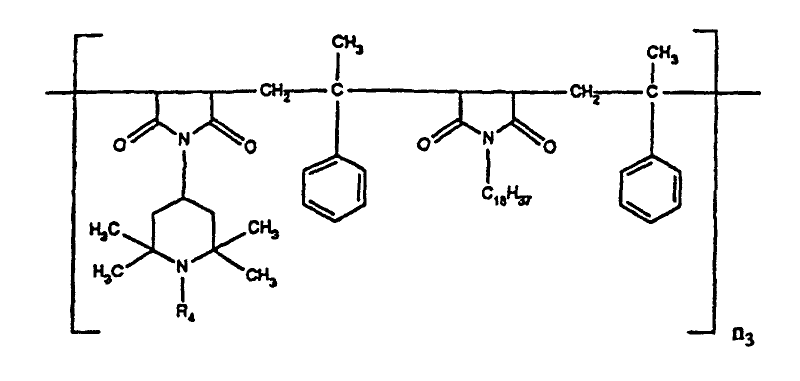 or 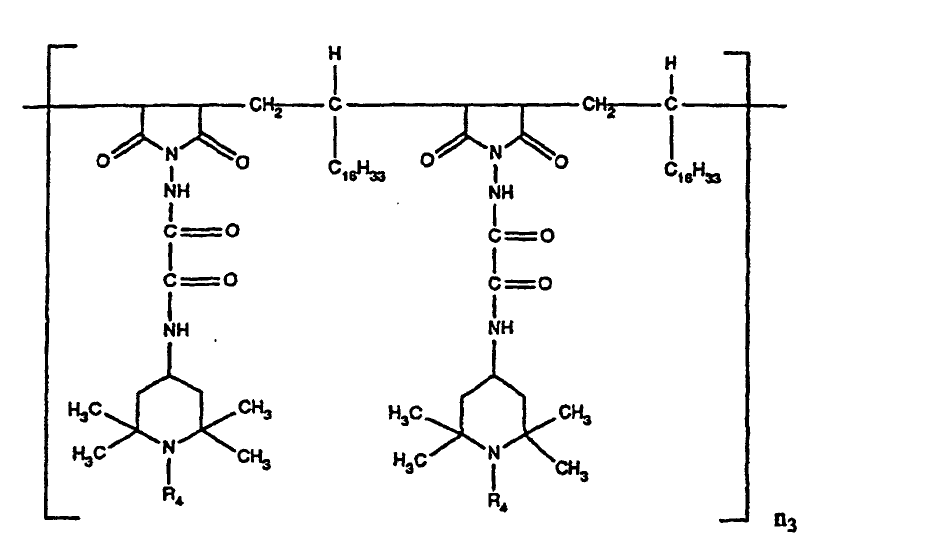 in which R₄ is hydrogen or methyl; and n₃ is a number from 1 to 50.

5. A stabilizer mixture according to claim 1, in which component d) is at least one compound of the formula 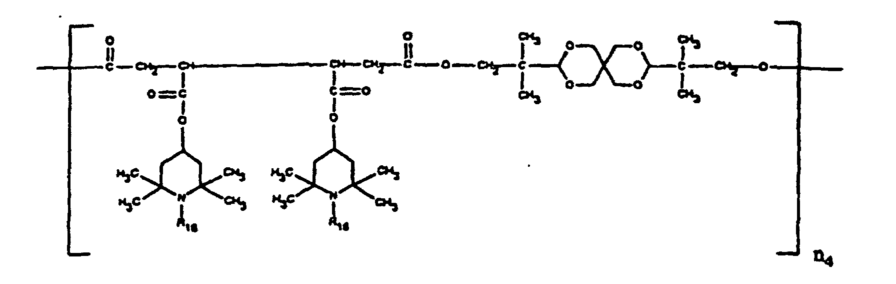 in which R₁₆ is hydrogen or methyl, and n₄ is a number from 1 to 50.

6. A stabilizer mixture according to claim 1, in which n₅', n₅'', n₅''', independently of one another, are a number from 2 to 4, R₁₇ is C₁-C₄alkyl, and R₁₈ is hydrogen.

7. A stabilizer mixture according to claim 1, which comprises components a) and b).

8. A stabilizer mixture according to claim 1, which comprises components a) and c).

9. A stabilizer mixture according to claim 1, which comprises components a) and d).

10. A stabilizer mixture according to claim 1, which comprises components a) and e).

11. A stabilizer mixture according to claim 1, in which component e) is a compound of the formula VI-1, VI-2 or VI-3 or a mixture of these three compounds, 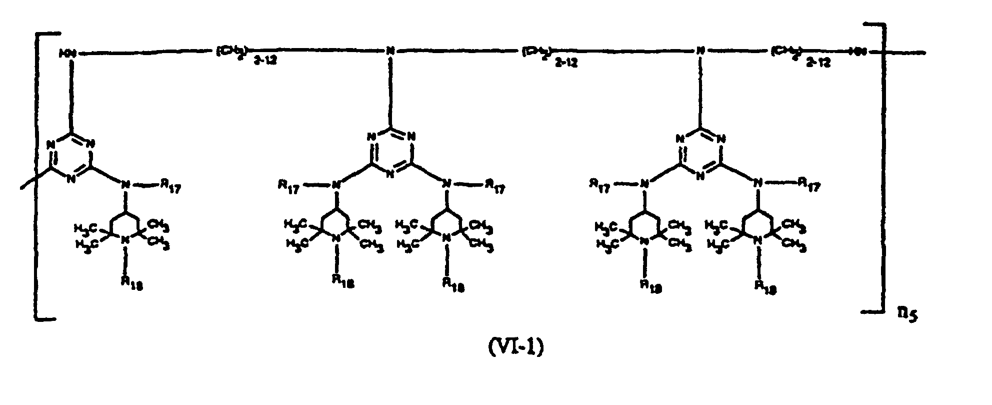 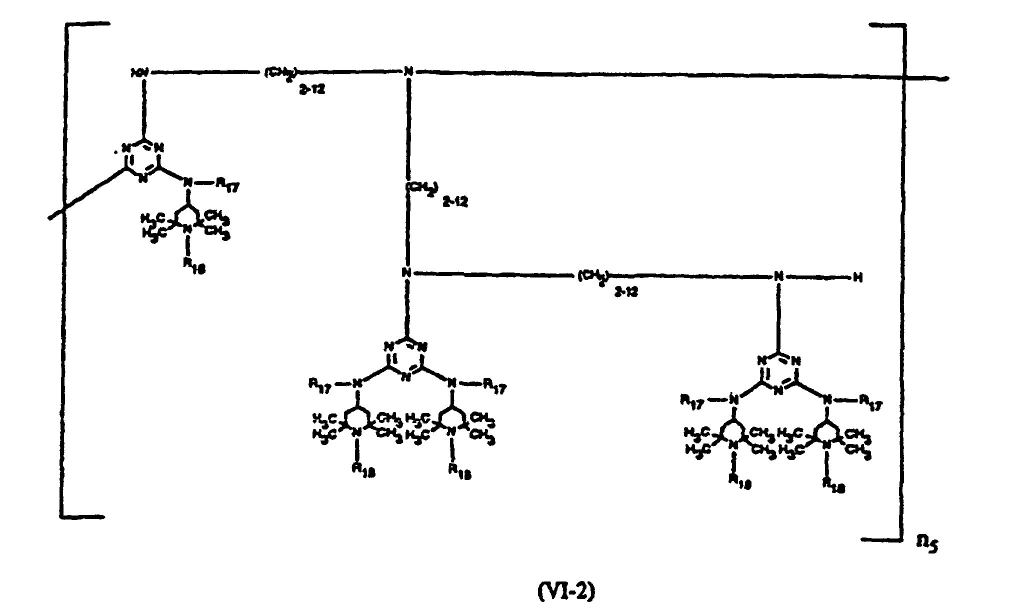 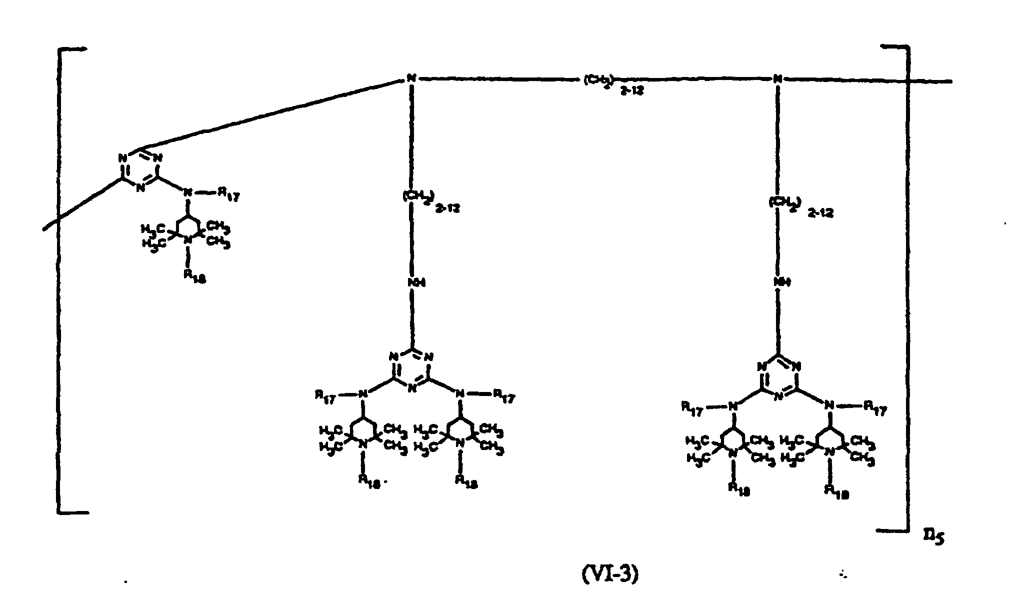 in which n₅ is 1 to 20.

12. A stabilizer mixture according to claim 1, in which component e) is a compound of the formula 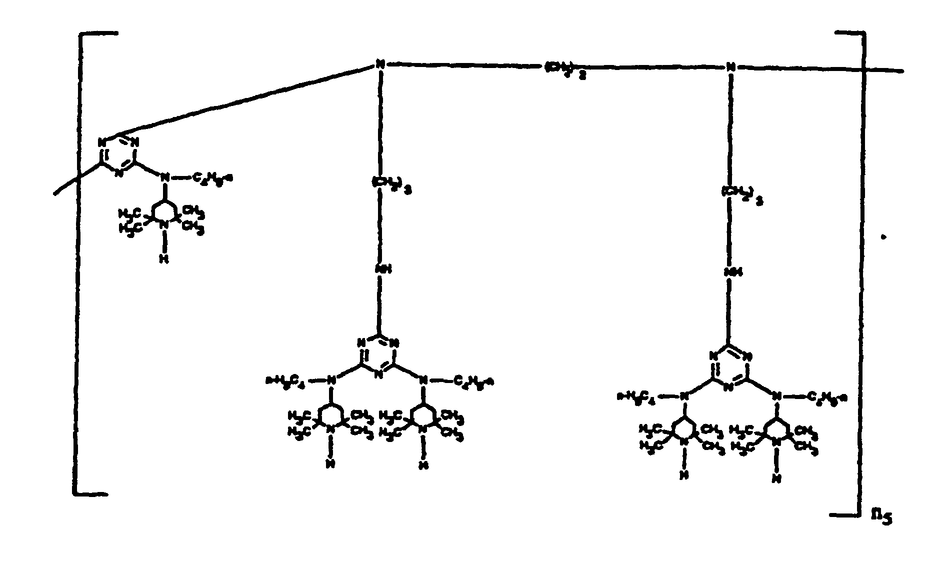 in which n₅ is 1 to 20.

13. A stabilizer mixture according to claim 1, which contains components a) and e)
in which R₁ is hydrogen, R₂ is ethylene and n₁ is a number from 2 to 25, and
in which component e) is a compound of the formula 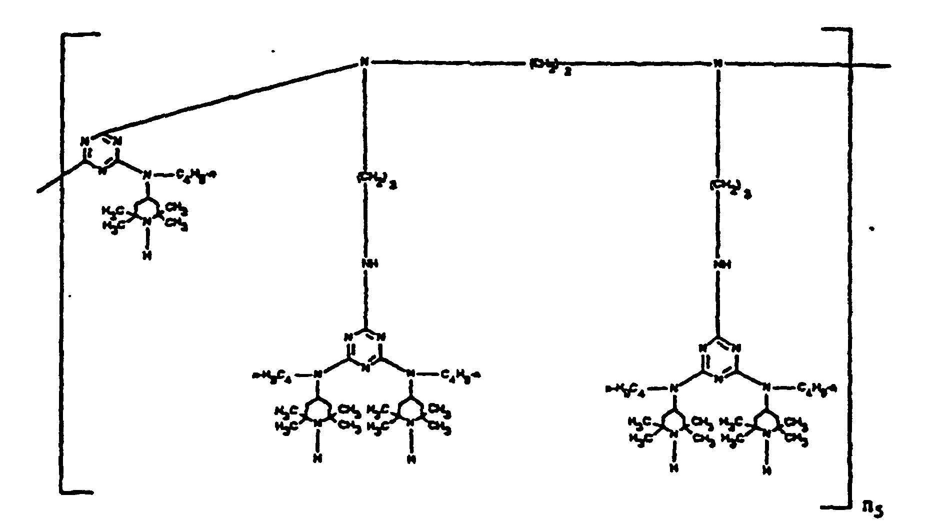 in which n₅ is 1 to 20.

14. A composition comprising an organic material which is sensitive to oxidative, thermal or photoinduced degradation and a stabilizer mixture according to claim 1.

15. A composition according to claim 14, in which the organic material is a polyolefin.

16. A composition according to claim 14, in which the organic material is polyethylene, polypropylene or a copolymer of polyethylene or polypropylene.

17. A process for stabilizing an organic material which is sensitive to oxidative, thermal or photoinduced degradation, **characterized in that** a stabilizer mixture according to claim 1 is incorporated into the organic material.

18. A stabilizer mixture comprising a compound of the formula A-I 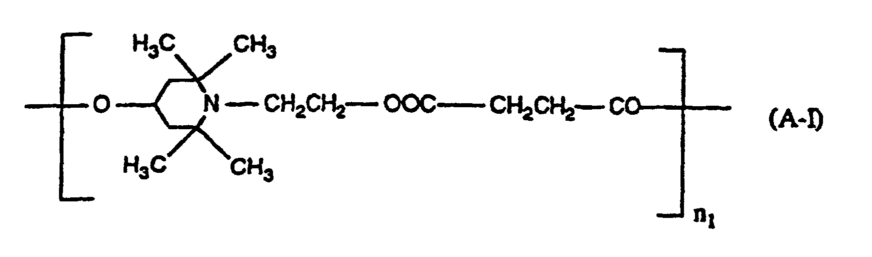 in which n₁ is a number from 2 to 25, and a compound of the formula F-I 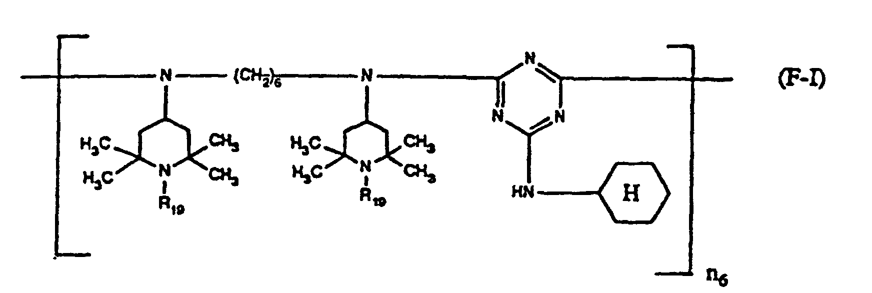 in which R₁₉ is hydrogen, C₁-C₈alkyl, O⁻, -CH₂CN, C₃-C₆alkenyl, C₇-C₉phenylalkyl, C₇-C₉phenylalkyl which is substituted by C₁-C₄alkyl on the phenyl radical, or C₁-C₈acyl and n₆ is a number from 2 to 25.

## Revendications

1. Mélange stabilisant contenant un composant a) et un composant b), c), d) ou e), dans lequel
le composant a) est au moins un composé de formule I, 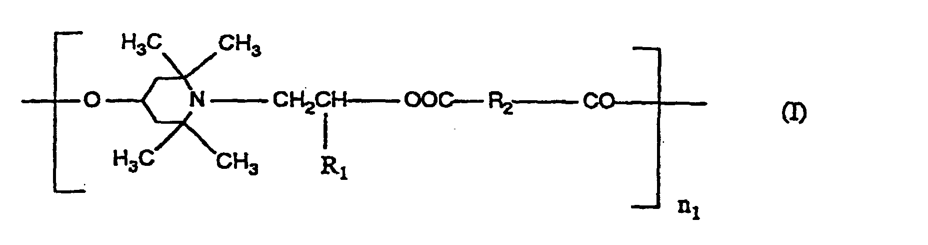 dans laquelle
R₁ représente un atome d'hydrogène ou un groupe méthyle,
R₂ représente une liaison directe ou un groupe alkylène en C₁ à C₁₀ et
n₁ représente un nombre de 2 à 50 ;
le composant b) est au moins un composé de formules IIa et IIb, 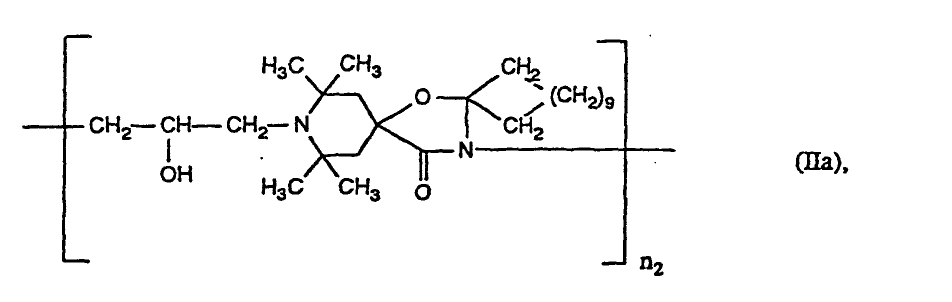 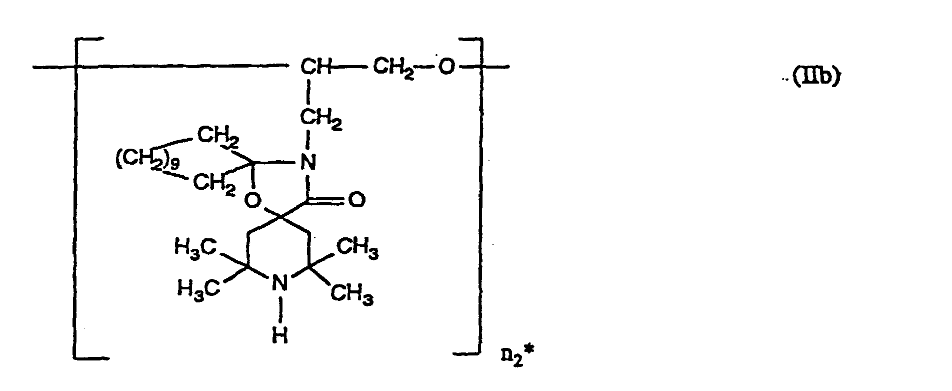 dans lesquelles n₂ et n₂* représentent un nombre de 2 à 50 ;
le composant c) est au moins un composé de formule III, 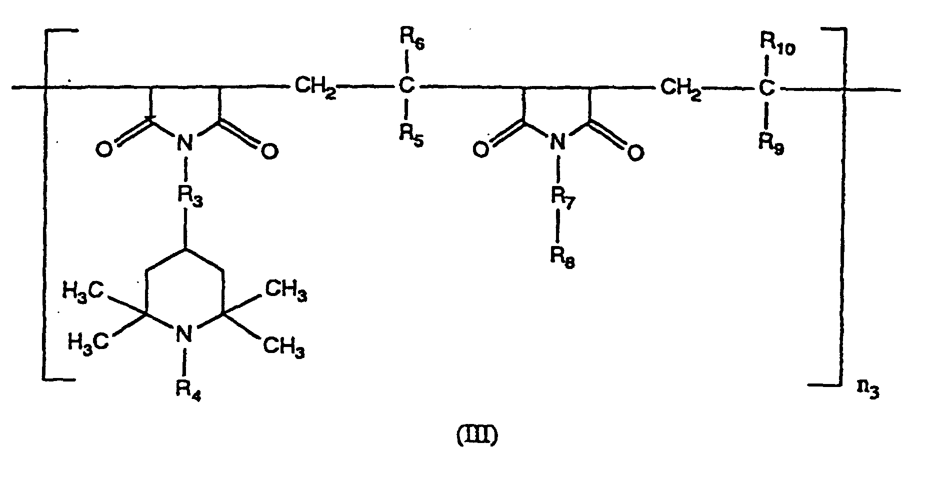 dans laquelle R₃ et R₇ représentent, indépendamment l'un de l'autre, une liaison directe ou un groupe -N(X₁)-CO-X₂-CO-N(X₃)-, X₁ et X₃ représentent, indépendamment l'un de l'autre, un atome d'hydrogène, un groupe alkyle en C₁ à C₈, cycloalkyle en C₅ à C₁₂, phényle, (phényle en C₇ à C₉)alkyle ou un groupe de formule IV 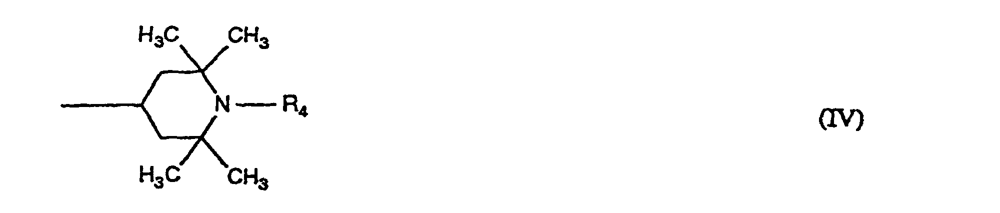 X₂ représente une liaison directe ou un groupe alkylène en C₁ à C₄,
R₄ représente un atome d'hydrogène, un groupe alkyle en C₁ à C₈, O⁻, -CH₂CN, un groupe alcényle en C₃ à C₆, (phényle en C₇ à C₉)alkyle, un groupe (phényle en C₇ à C₉) alkyle substitué sur le noyau phényle par un groupe alkyle en C₁ à C₄ ou un groupe acyle en C₁ à C₈,
R₅, R₆, R₉ et R₁₀ représentent, indépendamment les uns des autres, un atome d'hydrogène, un groupe alkyle en C₁ à C₃₀, cycloalkyle en C₅ à C₁₂ ou phényle,
R₈ représente un atome d'hydrogène, un groupe alkyle en C₁ à C₃₀, cycloalkyle en C₅ à C₁₂, (phényle en C₇ à C₉)alkyle, phényle ou un groupe de formule IV et
n₃ représente un nombre de 1 à 50 ;
le composant d) est au moins un composé de formule V, 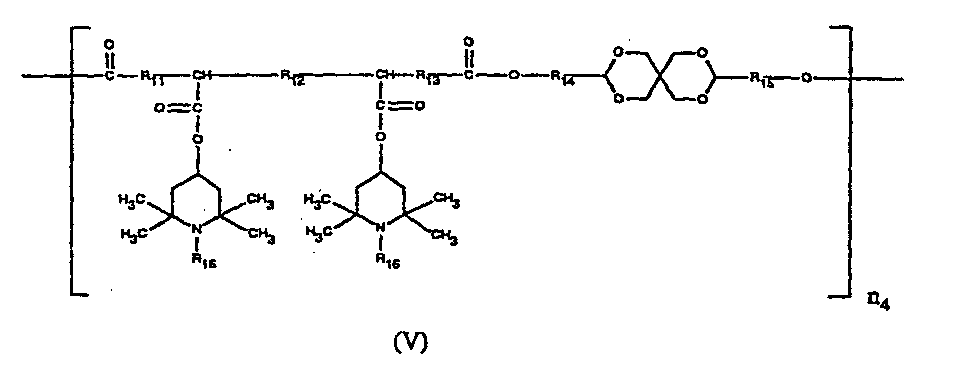 dans laquelle R₁₁, R₁₂, R₁₃, R₁₄ et R₁₅ représentent, indépendamment les uns des autres, une liaison directe ou un groupe alkylène en C₁ à C₁₀, R₁₆ a la signification mentionnée pour R₄ et n₄ représente un nombre de 1 à 50 ; et
le composant e) est un produit pouvant être obtenu en faisant réagir un produit, obtenu par la réaction d'une polyamine de formule VIa avec du chlorure d'acide cyanurique, avec un composé de formule VIb, 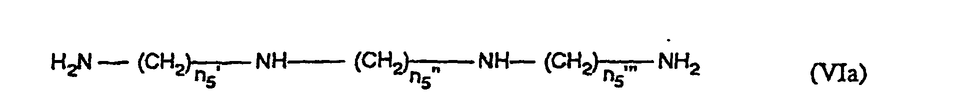 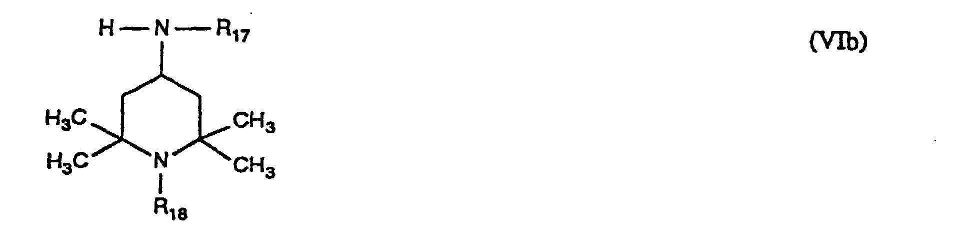 dans laquelle n₅', n₅" et n₅"' représentent, indépendamment les uns des autres, un nombre de 2 à 12, R₁₇ représente un atome d'hydrogène, un groupe alkyle en C₁ à C₁₂, cycloalkyle en C₅ à C₁₂, phényle ou (phényle en C₇ à C₉)alkyle et R₁₈ a l'une des significations mentionnées pour R₄.

2. Mélange stabilisant selon la revendication 1, dans lequel R₁ représente un atome d'hydrogène, R₂ représente un groupe éthylène et n₁ représente un nombre de 2 à 25.

3. Mélange stabilisant selon la revendication 1, dans lequel R₃ et R₇ représentent une liaison directe ou un groupe -N(X₁)-CO-X₂-CO-N(X₃)-, X₁ et X₃ représentent, indépendamment l'un de l'autre, un atome d'hydrogène ou un groupe alkyle en C₁ à C₄, X₂ représente une liaison directe, R₄ représente un atome d'hydrogène, un groupe alkyle en C₁ à C₄, OH, (alkyle en C₆ à C₁₂)oxy, (cycloalkyle en C₅ à C₈)oxy, allyle, benzyle ou acétyle, R₅ et R₉ représentent un groupe alkyle en C₁ à C₂₅ ou phényle, R₆ et R₁₀ représentent un atome d'hydrogène ou un groupe alkyle en C₁ à C₄, R₈ représente un groupe alkyle en C₁ à C₂₅ ou un groupe de formule IV, R₁₁, R₁₃, R₁₄ et R₁₅ représentent un groupe alkylène en C₁ à C₄, R₁₂ représente une liaison directe et R₁₆ a l'une des significations mentionnées pour R₄.

4. Mélange stabilisant selon la revendication 1, dans lequel le composant c) est au moins un composé de formule 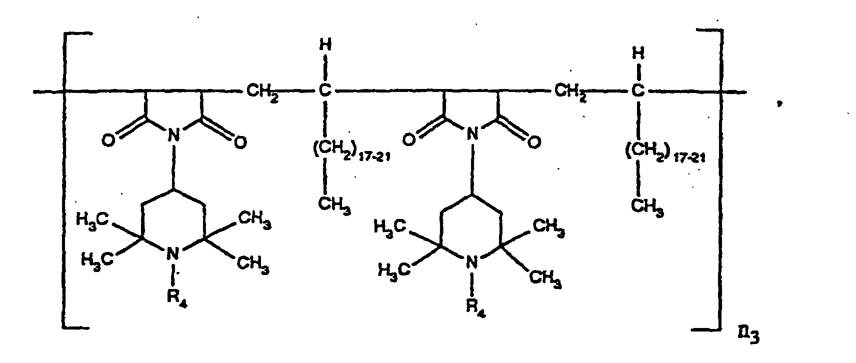 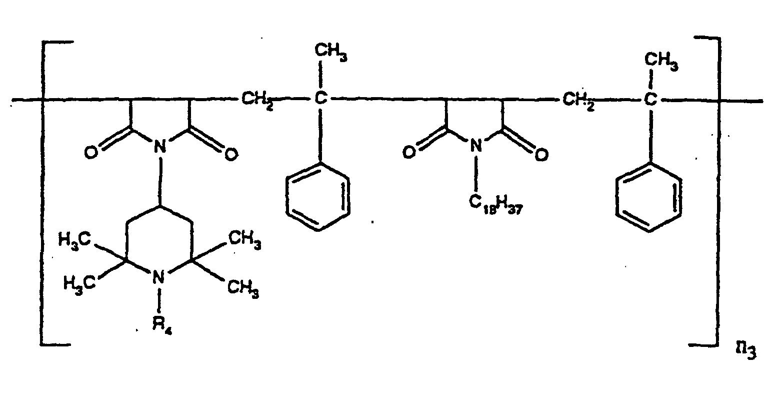 ou 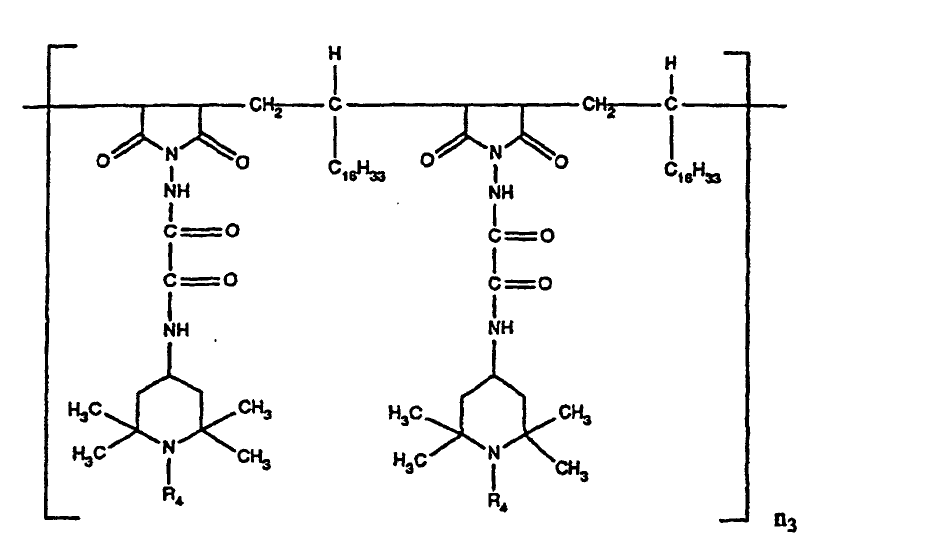 dans laquelle R₄ représente un atome d'hydrogène ou un groupe méthyle et n₃ représente un nombre de 1 à 50.

5. Mélange stabilisant selon la revendication 1, dans lequel le composant d) est au moins un composé de formule 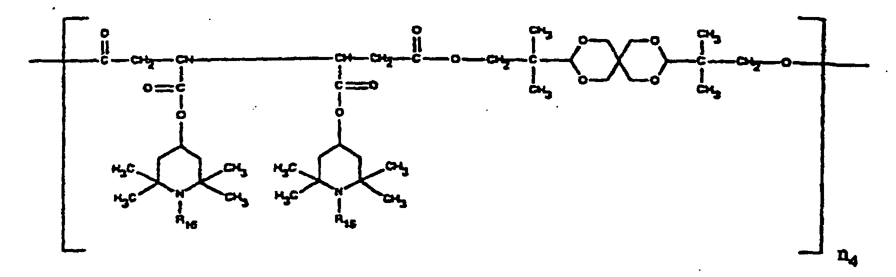 dans laquelle R₁₆ représente un atome d'hydrogène ou un groupe méthyle et n₄ représente un nombre de 1 à 50.

6. Mélange stabilisant selon la revendication 1, dans lequel n₅', n₅" et n₅''' représentent, indépendamment les uns des autres, un nombre de 2 à 4, R₁₇ représente un groupe alkyle en C₁ à C₄ et R₁₈ représente un atome d'hydrogène.

7. Mélange stabilisant selon la revendication 1 contenant les composants a) et b).

8. Mélange stabilisant selon la revendication 1 contenant les composants a) et c).

9. Mélange stabilisant selon la revendication 1 contenant les composants a) et d).

10. Mélange stabilisant selon la revendication 1 contenant les composants a) et e).

11. Mélange stabilisant selon la revendication 1, dans lequel le composant e) est un composé de formule VI-1, VI-2 ou VI-3 ou un mélange de ces trois composés, 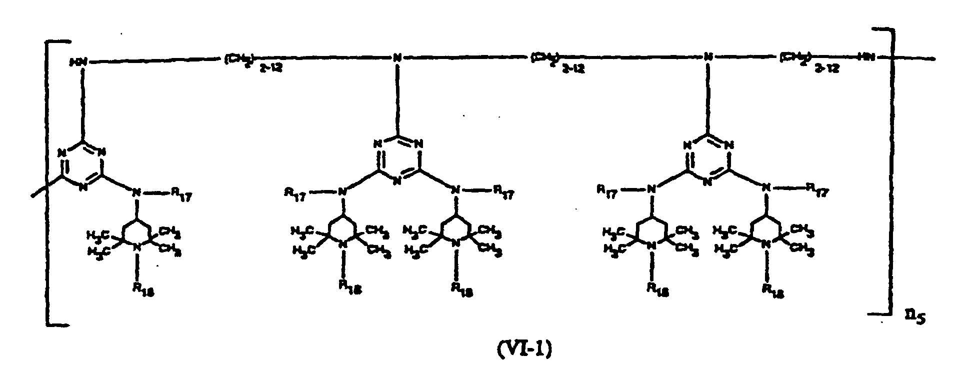 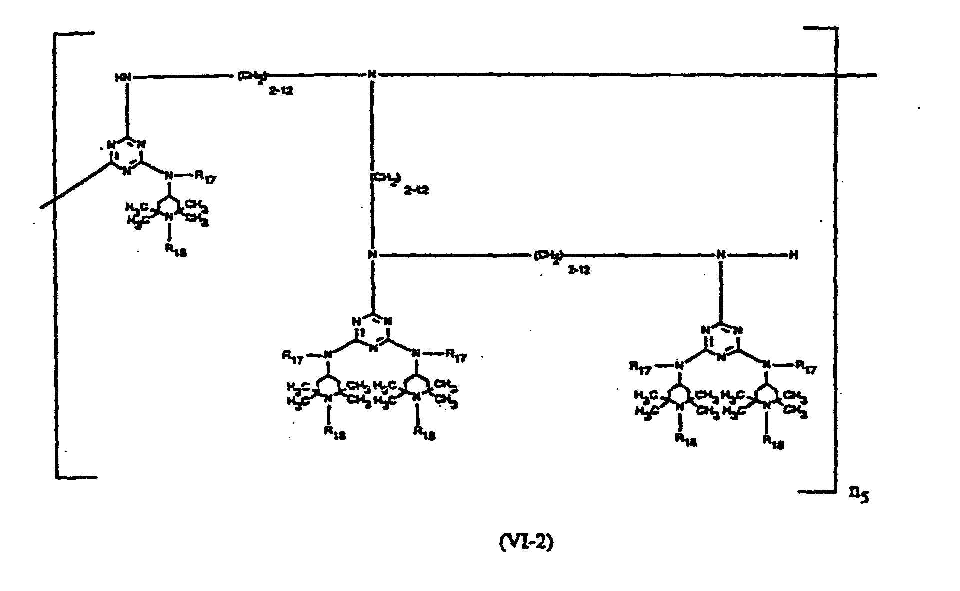 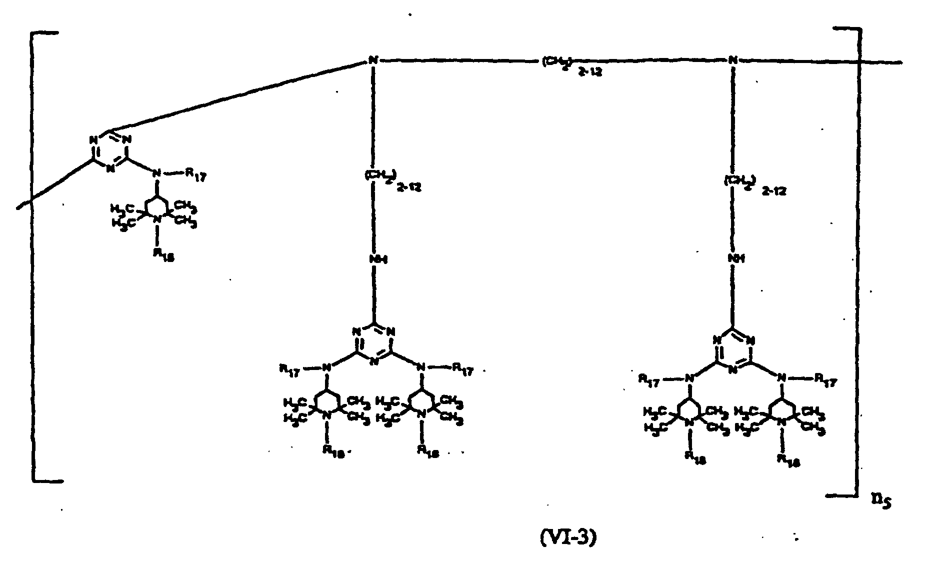 dans lesquels n₅ représente un nombre de 1 à 20.

12. Mélange stabilisant selon la revendication 1, dans lequel le composant e) est un composé de formule 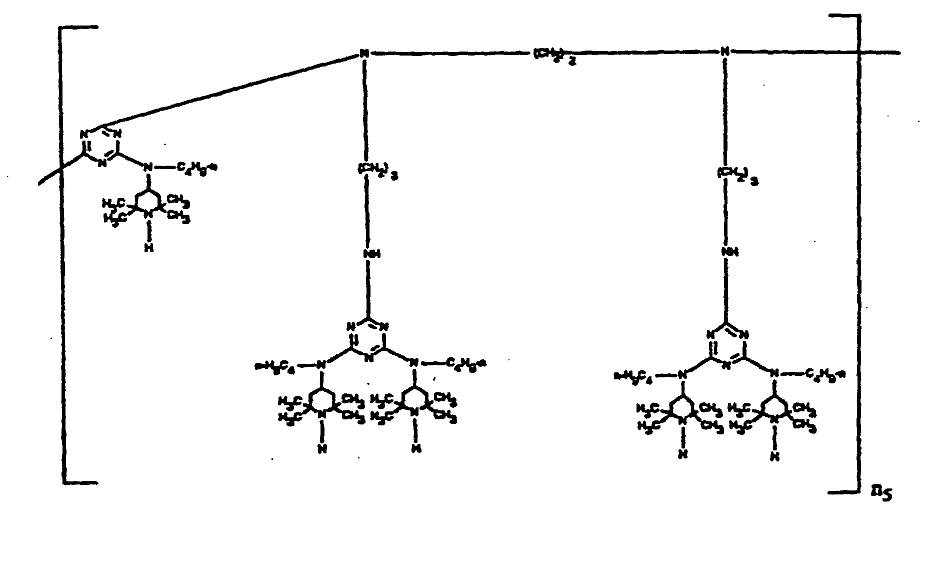 dans laquelle n₅ représente un nombre de 1 à 20.

13. Mélange stabilisant selon la revendication 1 contenant les composants a) et e),
dans lequel R₁ représente un atome d'hydrogène, R₂ représente un groupe éthylène et n₁ représente un nombre de 2 à 25, et
dans laquelle le composant e) est un composé de formule 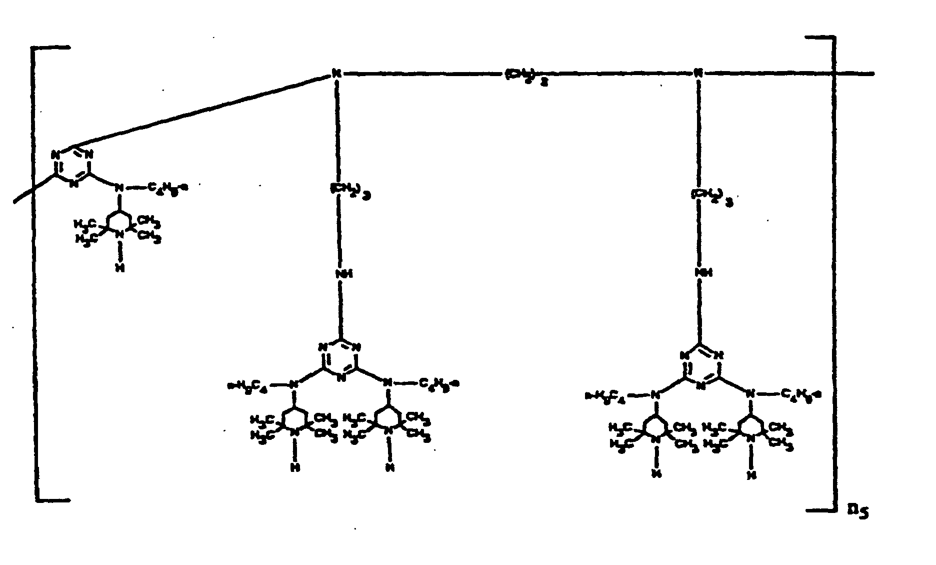 dans laquelle n₅ représente un nombre de 1 à 20.

14. Composition contenant une matière organique sensible à une dégradation oxydative, thermique ou induite par la lumière et un mélange stabilisant selon la revendication 1.

15. Composition selon la revendication 14, dans laquelle la matière organique est une polyoléfine.

16. Composition selon la revendication 14, dans laquelle la matière organique est un polyéthylène, un polypropylène ou un copolymère de polyéthylène ou de polypropylène.

17. Procédé pour stabiliser une matière organique sensible à une dégradation oxydative, thermique ou induite par la lumière, **caractérisé en ce que** l'on incorpore un mélange stabilisant selon la revendication 1 dans la matière organique.

18. Mélange stabilisant contenant un composé de formule A-I, 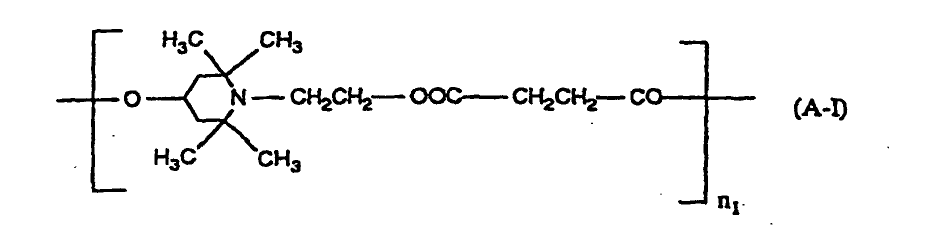 dans laquelle n₁ représente un nombre de 2 à 25, et un composé de formule F-I, 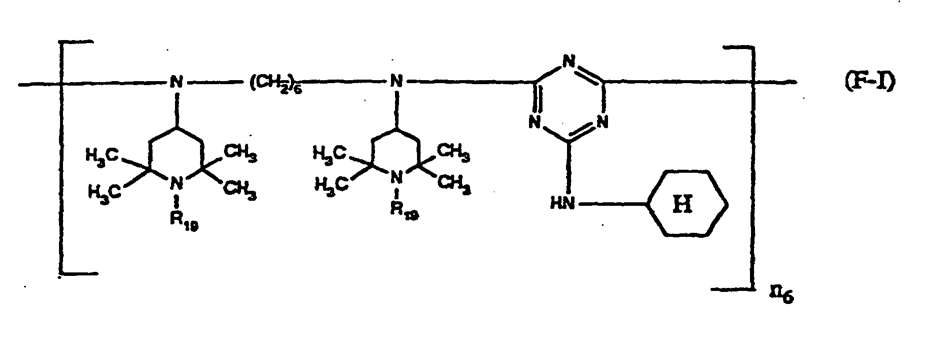 dans laquelle R₁₉ représente un atome d'hydrogène, un groupe alkyle en C₁ à C₈, O⁻, -CH₂CN, alcényle en C₃ à C₆, (phényle en C₇ à C₉)alkyle, (phényle en C₇ à C₉)alkyle substitué sur le noyau phényle par un groupe alkyle en C₁ à C₄ ou acyle en C₁ à C₈ et n₆ représente un nombre de 2 à 25.
